# EUROPEAN PATENT APPLICATION

(11) **EP 1 263 185 A2**
(43) Date of publication of application: **04.12.2002**
(21) Application number: 02011626.5
(22) Date of filing: 29.05.2002
(51) Int. Cl.: H04L 29/06, H04L 29/12, H04Q 7/20

(54) **Communications system managing server, routing server, mobile unit managing server, and area managing server**

(30) Priority: 30.05.2001 JP 2001162720; 21.06.2001 JP 2001188016; 20.02.2002 JP 2002043730; 27.02.2002 JP 2002052188; 14.05.2002 JP 2002139042; 14.05.2002 JP 2002139043; 14.05.2002 JP 2002139044
(71) Applicant: MITSUBISHI MATERIALS CORPORATION, Chiyoda-ku, Tokyo (JP)
(72) Inventor: Tari, Kazuyoshi, Mitsubishi Materials Corporation, Musashino-shi, Tokyo (JP); Chiba, Toshiyuki, Mitsubishi Materials Corporation, Bunkyo-ku, Tokyo (JP); Unoki, Hiroyuki, Mitsubishi Materials Corporation, Musashino-shi, Tokyo (JP)
(74) Representative: HOFFMANN - EITLE

(57) **Abstract**

The present invention provides a communications system that includes a plurality of networks connected to a global network and having as essential components, for each network, at least one routing server and a radio base station connected to the one routing server to communicate using radio signals with one mobile radio unit connected to a terminal or a host, and, when one mobile radio unit or a host connected to one network is transmitting data to another mobile radio unit connected to another network, and if a destination address resolution is required, a communications system managing server responds to a destination address resolution request transmitted from the one mobile radio unit or the host, and transmits an IP address allocated to the other mobile radio unit by the currently connected routing server to the one mobile radio unit or the host.

## Description

### BACKGROUND OF THE INVENTION

### Field of the Invention

The present invention relates to a communications system managing server for managing mobile radio units moving in IP networks and communicating through IP, including wireless communication areas.

Also, the present invention relates to a routing server and to a mobile unit managing server that can ensure security even when a user travels between different networks.

Also, the present invention relates to an area managing server that enables reduction in network traffic.

### Brief Description of the Related Art

The Internet provides an environment that anyone can access and has evolved into a large global network. For example, a communications terminal connected to one network and a communications terminal connected to another network can communicate with each other via the Internet.

Also, in the past, methods have been examined to enable communication, even when a communications terminal passes from one network to another network. In addition, in wired Intranet systems maintained by individual businesses, unauthorized access to an internal network of each business is generally prevented by restricting access using firewalls.

Such communications between terminals through the Internet are carried out conventionally by using a DNS (domain name system) server, and information is transmitted or received by converting an FQDN (fully qualified domain name) into an IP address, or converting an IP address to an FQDN.

Also known are communications systems that allow a terminal to communicate with another terminal by radio while the user is moving. In this communications system, if the terminal registered with a home server (referred to as the home agent HA) is to be connected to a different server (referred to as the foreign agent FA), the terminal receives announcements being transmitted by the FA through multicasting. The terminal thus realizes that it is not inside the communications area served by the HA, so that a registration request is transmitted to the FA. Upon receiving the request, the FA carries out authentication processing with the HA. When the authentication processing is completed, a tunnel is established between the FA and the HA, and authentication processing of the terminal is carried out. By following such a procedure, the terminal is able to communicate even when it is outside the communications area served by the home agent.

Accordingly, Mobile IP, which allows reception of IP packets even when traveling between different IP networks, is becoming popular.

However, according to the conventional technology described above, the use of the conventional DNS server in management of mobile terminals traveling between the networks results in a change in its IP address for every transition of the mobile terminal or mobile radio unit using radio waves for communication, so that such a DNS server has difficulty in knowing the current location of the mobile radio unit. This is because a conventional DNS server does not take into account the possibility that the location of a terminal may change, and in addition, it is not practical to provide such a capability to existing DNS servers.

In addition, there has been a problem in that Mobile IP is a heavy system. That is, any attempt to introduce Mobile IP must meet a requirement that all IP networks (including existing Intranets) have respective home agents (HA) and foreign agents (FA). Furthermore, when the mobile terminal is being moved quickly or when the cell structure is small so that zones are crossed frequently, it is necessary to track the location of the mobile terminal in real-time; otherwise, there is a danger that tracking may be lost, but such an approach invites excessive Agent advertisement.

Also, if there is an attempt to ensure the same degree of security with the FA as with the HA, it is necessary to transmit security information containing the security information from the HA to the FA for ever y location of the mobile terminal. Therefore, if the security information is forwarded to every location of the mobile terminal, this leads to a problem of excessive increase in network traffic.

Also, "Mobile IP" does not have a capability to restrict acc ess, and the security level of the mobile terminal is limited by the security level of the network itself. Therefore, a required security level could not be maintained when a mobile terminal travels from the home network to another network. Thus, in this case, there has been a problem in that the conventional technology could not ensure the security level of the mobile terminal in other networks.

Also, all post-authentication communication is though the HA, so that the security level could not be changed for each network to which the mobile terminal may be connected.

In a system connecting one network to another network with cables, it is certainly easily possible to protect secret information by providing a firewall between the one network and other networks. By applying a similar consideration to the wireless system, it may be thought that the security information can be protected by providing a firewall at the junction to a wireless LAN (local area network). However, it is not realistic to expect to ensure security of communication by this method for the mobile terminal that can travel over a wide area across an entire country.

### SUMMARY OF THE INVENTION

The present invention is provided in view of the situation described above, and it is an object of the present invention to provide a communications system that, even when a mobile terminal or mobile radio unit travels through various networks, enables greatly suppressing increased load on the network and to offer reliability (accurately recogniz ing individual mobile terminals so as not to cause terminals to become untraceable, i.e., lost).

Also, the present invention provides a communications system that maintains the security level provided by the home network in a foreign network.

Also, the present invention is provided in view of the situations described above such that another object is to provide, in a wireless network in which radio units having different security levels coexist, a routing server and a mobile unit managing server that can provide security of communication, even when the mobile terminal travels through a plurality of such networks.

Also, the present invention is provided in view of the situations described above such that another object is to provide, an area managing server that enables reduction of the traffic in the network, and to enable change of the security level for each network.

To achieve the objects described above, the present invention provides a radio communications system for a plurality of networks connected to a global net work comprised of essential components, for each network, including at least one routing server and a radio base station connected to the routing server to communicate using radio signals with a mobile radio unit connected to a terminal, wherein a communications system managing server is provided for managing addresses of the mobile radio unit traveling between the networks.

Also, the above radio communication system provides a feature that the communications system managing server further performs a security managing operation to determine whether or not to permit communication of the mobile radio unit traveling between the networks with other communications devices.

Also, the above radio communication system provides a feature that when one mobile radio unit or a host connected to one of the networks attempts to communicate with another mobile radio unit connected to another network, in response to a destination address resolution request transmitted from the one mobile radio unit or the host, an Internet Protocol address allocated to the other mobile radio unit by a routing server currently connected to the other mobile radio unit is notified to the one mobile radio unit or the host.

Also, the present invention provides a communications system managing server which is provided in a radio communications system for a plurality of networks connected to a global network comprised of essential components, for each network, including at least one routing server and a radio base station connected to the routing server to communicate using radio signals with a mobile radio unit connected to a terminal, and is so connected to the global network wherein when one mobile radio unit or a host connected to one of the networks attempts to communicate with another mobile ra dio unit connected to another network, and if a destination address resolution is required, in response to a destination address resolution request transmitted from the one mobile radio unit or the host, an Internet Protocol address allocated to the other mobile radio unit by a routing server currently connected to the other mobile radio unit is notified to the one mobile radio unit or the host by the communications system managing server.

Also, the present invention provides a communications system managing server which is provided in a radio communications system for a plurality of networks connected to a global network comprised of essential components, for each network, including at least one routing server and a radio base station connected to the rout ing server to communicate using radio signals with a mobile radio unit connected to a terminal, and is so connected to the global network wherein when one mobile radio unit or a host connected to one of the networks attempts to communicate with another mob ile radio unit connected to another network and is controlled by a routing server that is not controlled by a home mobile unit managing server, and if a destination address resolution is required, an Internet Protocol address allocated to the other mobile radio unit by the routing server that is not controlled by the home mobile unit managing server is notified to the one mobile radio unit or the host by the communications system managing server.

Also, the present invention provides a method for managing a mobile radio unit traveling between networks in a radio communications system for a plurality of networks connected to a global network comprised of essential components, for each network, including at least one routing server and a radio base station connected to the routing server to communicate using radio signals with a mobile radio unit connected to the terminal wherein when one mobile radio unit or a host connected to one of the networks attempts to communicate with another mobile radio unit connecte d to another network and is controlled by a routing server that is not controlled by a home mobile unit managing server, and if a destination address resolution is required, an Internet Protocol address allocated to the other mobile radio unit by the routi ng server that is not controlled by the home mobile unit managing server is notified to the one mobile radio unit or the host.

Also, the present method provides a feature that the communications system managing server further performs a security managing operation to determine whether or not to permit communication of the mobile radio unit traveling between the networks with other communications devices.

Also, the present invention provides a recording medium having a computer-readable program for managing a mobile radio unit traveling between networks in a radio communications system for a plurality of networks connected to a global network comprised of essential components, for each network, including at least one routing server and a radio base station connected to the routing server to communicate using radio signals with the mobile radio unit connected to a terminal, wherein the computer -readable program executes a process in such a way that, when one mobile radio unit or a host connected to one of the networks attempts to communicate with another mobile radio unit connected to another network and is controlled by a routing server that is not controlled by a home mobile unit managing server, and if a destination address resolution is required, an Internet Protocol address allocated to the other mobile radio unit by the routing server that is not controlled by the home mobile unit managing server is notified to the one mobile radio unit or the host.

Also, the present method provides a feature that the computer-readable program further comprises a process for performing a security managing operation to determine whether or not to permit the mobile radio unit traveling between networks to communicate with another communications device.

Also, the present invention provides a mobile radio unit managing program for managing a mobile radio unit traveling between networks in a radio communications system for a plurality of networks connected to a global network comprised of essential components, for each network, including at least one routing server and a radio base station connected to the routing server to communicate using radio signals with a mobile radio unit connected to a terminal, wherein the mobile radio unit managing program executes a process in such a way that, when one mobile radio unit or a host connected to one of the networks attempts to communicate with another mobile radio unit connected to another network and is controlled by a routing server that is not controlled by a home mobile unit managing server, and if a destination address resolution is required, an Internet Protocol address allocated to the other mobile radio unit by the routing server that is not controlled by the home mobile unit managing server is notified to the one mobile radio unit or the host.

Also, the above mobile terminal managing program provides a feature that the mobile terminal managing program includes a process for managing security operations to determine whether or not to permit the mobile radio unit traveling between the networks to communicate with other communications devices.

According to the present invention, for destination address resolution of one mobile radio unit or a host connected to a network of the plurality of networks communicating with another mobile radio unit connected to another network, in response to an destination address resolution request transmitted from the one mobile terminal or the host, an IP address (global IP address) allocated to the other mobile radio unit is given to the one mobile radio unit or the host, so that even when a mobile radio unit travels between networks, destination address resolution can be provided while greatly reducing the load on the network.

Also, according to the present invention, for destination address resolution of one mobile radio unit or a host connected to a network of the plurality of networks communicating with another mobile radio unit connected to the other networks not managed by a routing server controlled by the home mobile unit managing server of the other mobile radio unit, an IP address allocated to the other mobile radio unit by the routing server currently connected to the other mobile radio unit is transmitted to the one mobile radio unit or the host, so that a communications system having high reliability (i.e., a high reliability in identifying the mobile radio unit accurately and avoiding losing track of the mobile radio unit), and to transmit data packets to the destination of the other mobile radio unit connected to the other network without tr ansferring through the home mobile unit managing server of the other mobile radio unit.

Also, according to the present invention, because security management operation of determining whether or not to permit communication between a mobile radio unit trave ling between networks and other communications device, the present communications system enables the maintenance of the same security level as that provided in the home network by the home mobile unit managing server to the mobile radio unit in the destination network. That is, the present communications system is ideal for application to an Intranet system that requires flexibility for the mobile radio unit to travel between different networks.

Further, to achieve the objects, the present invention provides a routing server in a communications system having at least one routing server connected to a network for connecting to a radio base station to communicate using radio signals with a mobile radio unit connected to an information terminal, comprising: a first security information storage device for storing the security information to instruct whether or not to permit communication between the mobile radio unit and an information communications device connected to the network; and a communication control d evice to control, when it is necessary to establish communication between the mobile radio unit and the information communications device, whether or not to establish communication between the mobile radio unit and the information communications device, based on the security information stored in the first security information storage device.

Also, the present invention further provides a mobile unit managing server which is provided in a communications system having at least one routing server connected to a network for connecting to a radio base station to communicate using radio signals with a mobile radio unit connected to an information terminal, and is connected to the routing server, comprising: a second security information storage device for storin g the security information to instruct whether or not to permit each mobile radio unit affiliated with the mobile unit managing server as its home mobile unit managing server to communicate with an information communications device connected to the network; and a security information transmitting control device to control transmitting of the security information in such a way that, when the mobile radio unit travels and a connecting routing server is changed, in response to a security information transmission request from the connecting routing server, reads out the security information stored in the second security information storage device and transmits the readout security information to the connecting routing server.

According to the present invention, because the security information to instruct whether or not to permit communication between the mobile radio unit and an information communications device connected to the common network is read out from the home mobile unit managing server and the readout security information is set in a routing server connected to the mobile radio unit at the destination, and security management of whether or not to permit communication is controlled according to the set security information, security of communication can be maintained even when the mobile radio unit travels between networks.

Also, according to the present invention, security of communication can be ensured for each mobile radio unit so that even if a large number of firms joined the same network, Intranet capability for each firm can be realized within the same network so that the communications system is suitable for businesses that travel over a wide area, as well as for businesses that exchange internal company information wirelessly to enable access of data from any network at the travel destination while maintaining the same security level.

To achieve the object, the present invention provides an area managing server for serving in a network of a radio communications system that includes a pluralit y of networks connected to a global network and having at least one routing server connected to the network; a radio base station connected to the routing server and communicating using radio signals with a mobile radio unit connected to a terminal; and a mobile unit managing server for managing the security information for determining whether or not to permit the mobile radio unit and a communications device connected to the network to communicate with each other; wherein the area managing server obtains the security information from a home mobile unit managing server of the mobile radio unit, and transmits the obtained security information to a routing server at the travel destination, which is controlled by the area managing server and which is located outside of a home network of the mobile radio unit, comprising: a memory device for storing the security information; an information managing device for managing the security information in such a way that the security information transmitted from the home m obile unit managing server to a routing server at the travel destination is received and stored in the memory device, and, when the mobile radio unit travels further from a communications area of the routing server at the further travel destination to a communications area of another routing server controlled by the area managing sever, the area managing server responds to a security information transmission request transmitted from the other routing server, and reads out the security information of the mobile radio unit stored in the memory device, and transmits readout the security information to the other routing server.

The area managing server above provides a feature that, when the mobile radio unit travels to a communications area controlled by another routing server not controlled by the home mobile unit managing server, prior to the information managing device transmitting the security information, an authentication process of the mobile radio unit is completed between the other routing server not controlled by the home mobile unit managing server and the home mobile unit managing server.

Also, the present invention provides a method of operating a radio communications system that includes a plurality of networks connected to a global network and having at least one routing server connected to a network; a radio base station connected to the routing server and communicating using radio signals with a mobile radio unit connected to a terminal; a mobile unit managing server for managing the security information for determining whether or not to permit the mobile radio unit and a communications device connected to the network to communicate with each other; and an area managing server for obtaining the security information from a home mobile unit managin g server of the mobile radio unit, and transmitting the obtained security information to a routing server at the travel destination, which is controlled by the area managing server and which is located outside of a home network of the mobile radio unit; wh erein the security information transmitted from the home mobile unit managing server to a routing server at the travel destination is received and stored, and when the mobile radio unit travels further from a communications area of the routing server at the travel destination to a communications area of another routing server controlled by the area managing sever, the area managing server responds to a security information transmission request transmitted from the other routing server, and reads out the security information of the mobile radio unit stored in the memory device, and transmits the readout security information to the other routing server.

Also, the present invention provides a communication program for execution by a computer to operate a radio communications system that includes a plurality of networks connected to a global network and having at least one routing server connected to a network; a radio base station connected to the one routing server and communicating using radio signals with a mobile radio unit connected to a terminal; a mobile unit managing server for managing the security information for determining whether or not to permit the mobile radio unit and a communications device connected to the network to communicate with each other; and an area managing server for obtaining the security information from a home mobile unit managing server of the mobile radio unit, and transmitting the obtained security information to a routing server at the travel destination, which is controlled by the area managing server and which is located outside of a home network of the mobile radio unit; the program includes: a step of receiving the security information transmitted from the home mobile unit managing server to the routing server at the travel destination; and a step of transmitting the security information, when the mobile radio unit travels further from a communications area of the routing server at the travel destination to a communications area of another routing server at the travel destination controlled by the area managing sever, by reading out and transmitting the security information of the traveling mobile radio unit stored in the memory device to the other routing server at the travel destination, in response to a security information transmission request transmitted from the other routing server at the travel destination.

Also, the present invention provides a computer-readable recording medium having a communication program for execution by a computer to operate a radio communicatio ns system that includes a plurality of networks connected to a global network and having at least one routing server connected to a network; a radio base station connected to the one routing server and communicating using radio signals with a mobile radio unit connected to a terminal; a mobile unit managing server for managing the security information for determining whether or not to permit the mobile radio unit and a communications device connected to the network to communicate with each other; and an are a managing server for obtaining the security information from a home mobile unit managing server of the mobile radio unit, and transmitting the obtained the security information to a routing server at the travel destination, which is controlled by the area managing server and which is located outside of a home network of the mobile radio unit; the program includes: a step of receiving the security information transmitted from the home mobile unit managing server to the routing server at the travel destination; and a step of transmitting the security information, when the mobile radio unit travels further from a communications area of the routing server at the travel destination to a communications area of another routing server at the travel destination controlled by the area managing sever, by reading out and transmitting the security information of the traveling mobile radio unit stored in the memory device to the other routing server at the travel destination, in response to a security information transmission request transmitted from the other routing server at the travel destination.

According to the present invention, the communications system is designed so that: the security information is transferred from the home mobile unit managing server and is received and stored in a memory device in a routing server at a transferred location so that, when the mobile radio unit further travels to another routing server at the travel destination controlled by the same area managing server, in response to a request from the other routing server at the travel destination, the security information stored in the memory device is read out and the readout security information is transmitted to the other routing server at the travel destination. Therefore, when the mobile terminal travels out of the home network, resulting in transferring from a routing server under control of the area managing server to another routing server under the control of the same area managing server, the system enables reduction of the number of transmissions required to deliver the security information from the home mobile unit managing server, and accordingly, the load on the network can be reduced, and further, an advantage is gained in that the security level can be altered for each network to suit individual purposes.

### BRIEF DESCRIPTION OF THE DRAWINGS

In the following, preferred embodiments of the present invention will be explained with reference to the drawings, in which like elements bear like reference numbers, and wherein:
Figure 1 is a diagram to explain the structure of the communications system in a first embodiment in a first viewpoint of the present invention;
Figure 2 is a diagram to explain the authentication operation of a mobile radio unit ML001 in the communications system;
Figure 3 is a diagram to show the sequence of operation of the communications system;
Figure 4 is a diagram to explain the operation of receiving data when the mobile radio unit ML001 is traveled to an area different from the home network;
Figure 5 is a schematic block diagram of the structure of the communications system managing server 10;
Figure 6 is a diagram to show an example of the information stored in the mobile radio unit database section 13 of the communications system managing server;
Figure 7 is a schematic block diagram of the structure of the mobile unit managing server MDBSX2;
Figure 8 is a diagram to show an example of the information stored in the mobile radio unit database section 83 of the mobile unit managing server MDBSX2;
Figure 9 is a schematic block diagram of the structure of the routing server RSY3;
Figure 10 is a diagram to show an example of the information stored in the mobile radio unit database section 93 of the routing server RSY3;
Figure 11 is a diagram to explain the structure of the communications system in another embodiment in the first viewpoint of the present invention;
Figure 12 is a diagram to explain the sequence of operation of the communications system in the embodiment shown in Figure 11;
Figure 13 is a diagram to show the sequence of operation in still another embodiment of the communications system in the first viewpoint of the present invention;
Figure 14 is a diagram to show the sequence of operation in a further embodiment of the communications system in the first viewpoint of the present invention;
Figure 15 is a diagram to show the sequence of operation in another embodiment of the communications system in the first viewpoint of the present invention;
Figure 16 is a schematic block diagram of the structure provided with the routing server in a first embodiment in a second viewpoint of the present invention;
Figure 17 is a schematic block diagram of the structure of a routing server RSA3;
Figure 18 is a diagram to explain one example of the security information stored in the security information storage section 213;
Figure 19 is a schematic block diagram to explain the structure of the mobile unit managing server MDBSA1;
Figure 20 is a diagram to show an example of the security information stored in the security information storage section 23;
Figure 21 is a flowchart to show the operation of a routing server, mobile unit managing server in the embodiment shown in Figure 16;
Figure 22 is a schematic diagram of the communications system in another embodiment in a second viewpoint of the present invention;
Figure 23 is a diagram to explain the operation of the security information setting process when the mobile radio unit ML001 is traveled itself from a communications area served by the routing server RSA3 to a communications area served by the routing server RSA2;
Figure 24 is a flowchart of the security information setting process when the mobile radio unit ML001 is traveled from a communications area served by the routing server RSA2 to a communications area served by the routing server RSA4;
Figure 25 is a flowchart of the operation performed when the mobile radio unit ML001 travels among the foreign network;
Figure 26 is a schematic block diagram of the structure provided with the area managing server in a first embodiment in a third viewpoint of the present invention;
Figure 27 is a diagram to show an example of the security information stored in the security information storage section 213;
Figure 28 a diagram to show an example of the security information stored in the security information storage section 23;
Figure 29 is a schematic block diagram to explain the structure of the area managing server AMC3;
Figure 30 is a diagram to show an example of the security information stored in the security information storage section 333;
Figure 31 is a diagram of the sequence of operation of the embodiment shown in Figure 27;
Figure 32 is a diagram to explain the process of determining whether or not communication has been established according to the security information;
Figure 33 is a diagram to explain the process of transmitting data to a mobile radio unit under the control of a routing server;
Figure 34 is a schematic block diagram to explain the structure of a mobile radio router and a terminal in another embodiment in a third viewpoint of the present invention.

### DETAILED DESCRIPTION OF THE PREFERRED EMBODIMENTS

In the following, a first embodiment in a first viewpoint of the present invention will be explained with reference to the drawings.

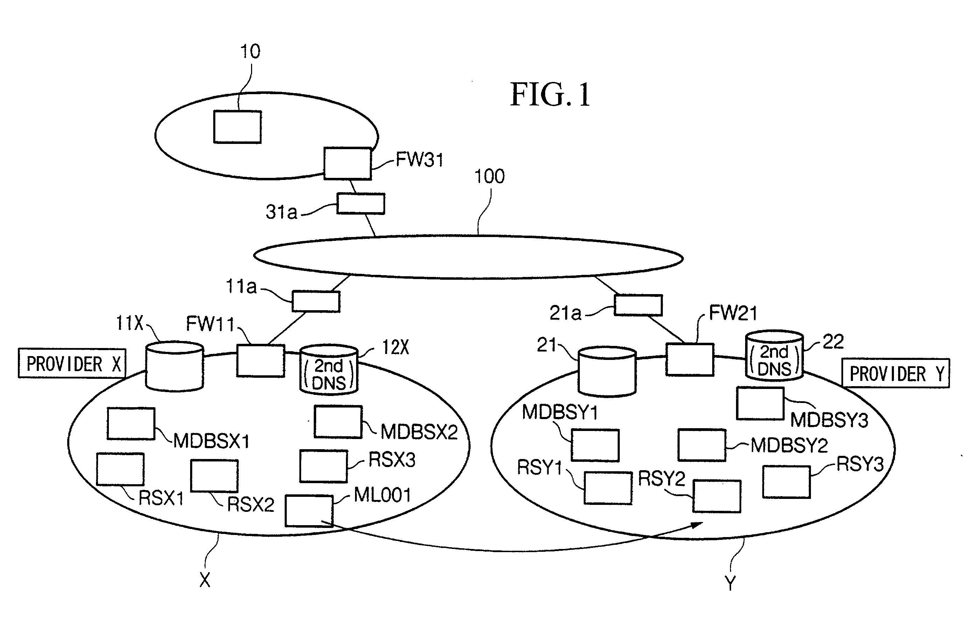

Figure 1 is a schematic block diagram of the structure of the communications system in the first embodiment of the present invention.

In this diagram, a communications system managing server 10 is connected to a global network 100 and manages information (the IDs, the FQDNs, the Mobile-FQDNs, the IP addresses, home mobile unit managing server, the security information, i.e., access restricting information, currently affiliated mobile unit managing server, currently affiliated routing server; these are explained below) in a mobile radio unit ML001 that travels between networks X and Y.

The global network 100 is, for example, a network such as the Internet. The networks X and Y are subnetworks such as Intranets managed by providers X and Y, and are connected through the global network 100. Firewalls FW11, FW21, FW31 and VPN (virtual private network) routers 11a, 21a, 31a are provided between the global network 100 and the communications system managing server 10, and between the global network 100 and the networks X and Y, respectively. Here, the firewalls, FW11, FW21, FW31 have a NAT (network address translation) capability. The VPN router 11a, VPN router 21a, VPN router 31a have a VPN capability.

RSX1-RSX3, RSY1-RSY3 are routing servers to provide routing of IP packets, and each of the routers RSX1-RSX3, RSY1-RSY3 is provided with at least one radio base station.

The mobile radio unit ML001 is connected to information terminals such as computers or PDAs (personal digital assistant), and transmit and receive various data to and from the routing server (RSX1-RSX3, RSY1-RSY3) through the radio base station. Also, the mobile radio unit ML001 has been given an identifier (the ID). In this embodiment, the home mobile unit managing server for the mobile radio unit ML001 is assumed to be a mobile unit managing server MDBSX2.

Mobile unit managing servers MDBSX1-MDBSX2, MDBSY1-MDBSY3 manage respective identifiers (the ID) and the IP addresses of the routing servers RSX1 -RSX3, RSY1-RSY3, the radio base station, the mobile radio unit ML001, and the information terminal. The routing server has a capability to allocate an IP address to mobile radio units affiliated to itself (refer to Japanese Patent Application, First Publication, 2000-156887).

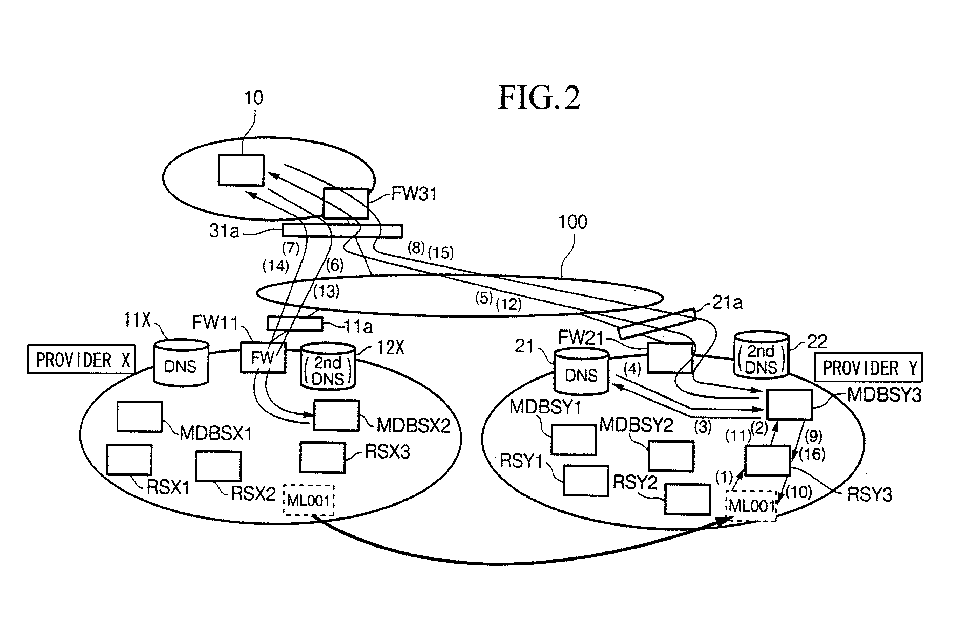

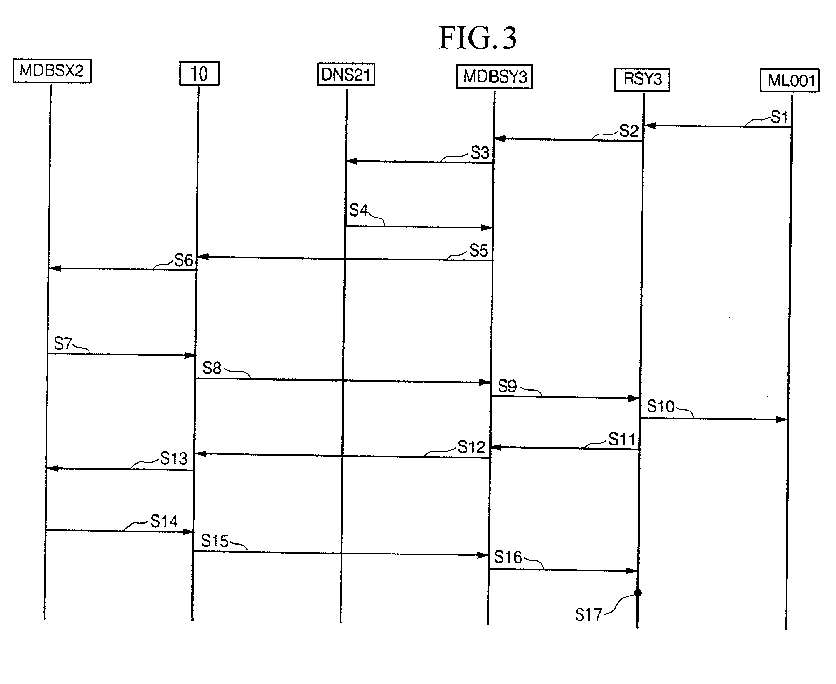

Next, authentication process for authenticating the mobile radio unit ML001 in the destination-network in the system shown in Figure 1 will be explained with reference to Figures 2, 3. Figure 2 is a diagram for explaining the authentication process, and Figure 3 is a diagram for explaining the sequences for the authentication process. In this example, the mobile radio unit ML001 under the control of the mobile unit managing server MDBSX2 travels to an area within the communications area of a radio base station under the control of a routing server RSY3. The corresponding parts in Figures 2 and 3 are given the same reference numbers and their explanations are omitted.

First, after moving into the communications area served by the radio base station of the routing server RSY3, the mobile radio unit ML001 transmits its own ID and a registration request to the routing server RSY3 through the radio base station (Figure 1, notation (1); step S1 in Figure 3).

The routing server RSY3 temporarily holds the ID of the mobile r adio unit ML001 and the registration request transmitted by the mobile radio unit ML001, and then, transmits the ID of the mobile radio unit ML001 and an authentication request, and also transmits a FQDN (FQDN, in this case, is "rsy3.providery") and the IP address of the routing server RSY3 (Figure 2, notation (2); step S2 in Figure 3).

The mobile unit managing server MDBSY3 temporarily holds the ID of the mobile radio unit ML001 and the authentication request, and the FQDN and the IP address of the routing server RSY3 transmitted by the routing server RSY3, and then, it determines whether or not the mobile radio unit is under its control according to the ID of the mobile radio unit ML001. Because the mobile unit managing server MDBSY3 does not manage the mobile radio unit ML001, the ID of the mobile radio unit ML001, a destination address resolution request and the IP address of the mobile unit managing server MDBSY3 are transmitted to a DNS (Domain Name Server) 21 (Figure 2, notation (3); step S3 in Figur e 3).

The DNS 21 determines whether or not it is a mobile radio unit under its control according to the ID of the mobile radio unit ML001 transmitted by the mobile unit managing server MDBSY3. Because the DNS 21 does not manage the mobile radio unit ML001, this information is transmitted to the mobile unit managing server MDBSY3 as the destination address resolution response (Figure 2, notation (4); step S4 in Figure 3). Upon receiving the destination address resolution response from the DNS 21, the mobile unit managing server MDBSY3 transmits the ID of the mobile radio unit ML001 and the authentication request and the FQDN of the routing server RSY3 and the IP address of mobile unit managing server MDBSY3 to the communications system managing server 10 through the firewall FW21, the VPN router 21a, the VPN router 31a and the firewall FW31 (Figure 2, notation (5); step S5 in Figure 3).

Upon receiving the ID of the mobile radio unit ML001 and the authentication request and the FQDN of the routing server RSY3 and the IP address of the mobile unit managing server MDBSY3 from the mobile unit managing server MDBSY3, the communications system managing server 10 stores information that the mobile radio unit ML001 has traveled to an area under the control of the mobile unit managing server MDBSY3, and retrieves the home mobile unit managing server of the mobile radio unit ML001 according to the ID of the mobile radio unit ML001. In this example, it is detected that the home mobile unit managing server of the mobile radio unit ML001 is the mobile unit managing server MDBSX2. Then, the communications system managing server 10 transmits the ID of the mobile radio unit ML001 and authentication request and the FQDN of the routing server RSY3 and the IP address of the communications system managing server 10 to the mobile unit managing server MDBSX2 through the fire wall FW31, the VPN router 31a, VPN 11a, and firewall FW11 (Figure 2, notation (6); step S6 in Figure 3).

The mobile unit managing server MDBSX2 temporarily holds the ID of the mobile radio unit ML001 and authentication request and the FQDN of the routing server RSY3 and the IP address of the communications system managing server 10 transmitted by the communications system managing server 10. Next, the mobile unit managing server MDBSX2 finds that the mobile radio unit ML001 is a routing server that is under its control according to the ID of the mobile radio unit ML001. Also, using the pre -stored FQDN of the mobile radio unit ML001 (FQDN in this case is m1001.mdbsx2.providerx) and the received FQDN (rsy3.providery) of the routing server RSY3, a "Mobile-FQDN" is synthesized (in this case, the Mobile-FQDN is m1001.mdbsx2.providerx.rsy3.providery), that shows the current association of the mobile radio unit ML001, and stores this piece of information. Then, authentication data to indicate that the mobile radio unit ML001 has been authenticated and the ID of the mobile radio unit ML001 and the Mobile-FQDN are transmitted to the communications system managing server 10 through the firewall FW11, VPN router 11A, the VPN router 31a, and the firewall FW31 (Figure 2, notation (7); step S7 in Figure 3).

The communications system managing server 10 stores the Mobile-FQDN of the mobile radio unit ML001 associated with the received ID of the mobile radio unit ML001, and transmits the authentication data and the ID/Mobile-FQDN of the mobile radio unit ML001 transmitted by the mobile unit managing server MDBSX2 to the mobile unit managing server MDBSY3 through the firewall FW31, the VPN router 31a, the VPN router 21a and the firewall FW21 by referencing to the stored the IP address of the mobile unit managing server MDBSY3 (Figure 2, notation (8); step S8 in Figure 3).

The mobile unit managing server MDBSY3 transmits the ID/Mobile-FQDN of the mobile radio unit ML001 and the authentication data transmitted by the communications system managing server 10, to the routing server RSY3, according to the temporarily -held IP address of the routing server RSY3 (Figure 2, notation (9); step S9 in Figure 3). The routing server RSY3 correlates and stores the ID of the mobile radio unit ML001, the Mobile-FQDN and the authentication data and allocates an IP address to the mobile radio unit ML001 (the IP address allocated here is any one of the IP addresses assigned to the routing server RSY3). Furthermore, a registration permission (or registration refusal) to indicate permission (or refusal) and the IP address/Mobile-FQDN of the mobile radio unit ML001 are transmitted through the radio base station to the mobile radio unit ML001 according to the ID of the mobile radio unit ML001 (Figure 2, notation (10); step S10 in Figure 3). Upon receiving the registration permission from the routing server RSY3, communication can be established through the routing server RSY3. Accordingly also, the mobile radio unit ML001 has been allocated an IP address that is effective while being connected to a routing server under the control of a different mobile unit managing server from the home mobile unit managing server, and because the Mobile-FQDN is given to correspond to the currently connected routing server, even when it is connected to a network other than the network to which the home mobile unit managing server is connected, the communications system managing server 10 is able to identify the routing server currently connected by the mobile radio unit ML001.

On the other hand, the routing server RSY3 transmits the ID of the mobile radio unit ML001 and a request for the security information for the mobile r adio unit ML001 to the mobile unit managing server MDBSY3 (Figure 2, notation (11); step S11 in Figure 3). In this case, the security information means information set in a mobile radio unit for its security, and contains information on accessible hosts, information regarding whether or not to use VPN capability, security level, and the like.

The mobile unit managing server MDBSY3 transmits the ID of the mobile radio unit ML001 and the request for the security information for the mobile radio unit ML001 which are transmitted by the routing server RSY3 to the communications system managing server 10, through the firewall FW21, the VPN router 21a, the VPN router 31a, and the firewall FW31, (Figure 2, notation (12); step S12 in Figure 3). At this time, because the mobile unit managing server MDBSY3 has not received a destination address resolution response from the DNS 21 in step S4 in Figure 3, which means that the mobile radio unit ML001 is not under its control, the security information request is transmitt ed to the communications system managing server 10.

The communications system managing server 10 transmits the ID of the mobile radio unit ML001 and the security information request for the mobile radio unit ML001 from the mobile unit managing server MDBSY3 further to the mobile unit managing server MDBSX2 through the firewall FW31, the VPN router 31a, the VPN router 11a, and the firewall FW11 according to the ID of the mobile radio unit ML001 (Figure 2, notation (13); step S13 in Figure 3).

Upon receiving the ID of the mobile radio unit ML001 and the security information request for the mobile radio unit ML001 from the communications system managing server 10, the mobile unit managing server MDBSX2 accesses the security information of the mobile radio unit ML001 according to the ID of the mobile radio unit ML001. Next, the mobile unit managing server MDBSX2 transmits the obtained security information for the mobile radio unit ML001 and the ID of the mobile radio unit ML001 to the communications system managing server 10 through the firewall FW11, VPN router 11a, the VPN router 31a, and the firewall FW31 (Figure 2, notation (14); step S14 in Figure 3).

The communications system managing server 10 transmits the ID of the mobile radio unit ML001 and the security information request for the mobile radio unit ML001 transmitted by the mobile unit managing server MDBSX2 further to the mobile unit managing server MDBSY3 through the VPN router 31a, the VPN router 21a, the firewall FW31, and firewall FW21 according to the ID of the mobile radio unit ML001 (Figure 2, notation (15); step S15 in Figure 3).

The mobile unit managing server MDBSY3 transmits the ID of the mobile radio unit ML001 and the security information request for the mobile radio unit ML001 transmitted by the communications system managing server 10 to the routing server RSY3 (Figure 2, notation (16); step S16 in Figure 3). The routing server RSY3 stores the received information by associating the ID of the mobile radio unit ML001 with the security information (step S17 in Figure 3).

By carrying out authentication process as explained above, the security information which is equivalent to such as recorded in the original routing server is set in the destination routing server. For this reason, the mobile radio unit ML001 is able to perform communication tasks in the communications area served by the radio base station managed by the mobile unit managing server MDBSY3 at the same security level as when it was under the control of the mobile unit man aging server MDBSX2.

Also, the authentication process described above are repeated when the mobile terminal travels to a communications area different from the communications area served by the currently connected routing server.

Here, in the embodiment described above, the authentication data and the security information are transmitted separately, but the security information may be transmitted by attaching it to the authentication data.

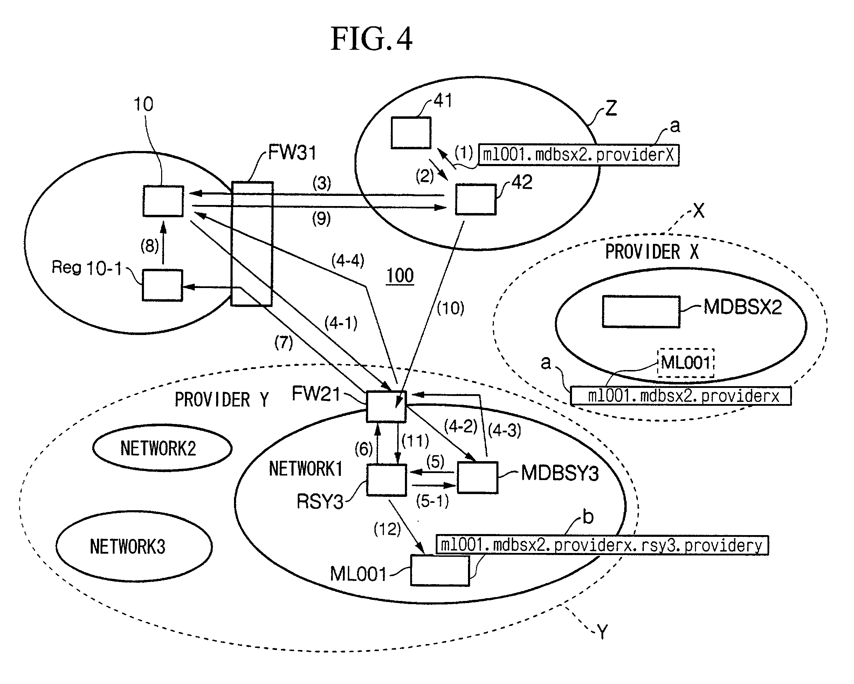

Next, with reference to Figure 4, the process for receiving data of the mobile radio unit ML001 from a host will be explained, when the mobile radio unit ML001 travels in an area outside the area managed by the home mobile unit managing server MDBSX2.

In Figure 4, except for the bracketed portion that shows a process, parts that correspond to those in Figure 1 are referred to by the same reference numbers, and their explanations are omitted. A host 42 is an information terminal that communicates within an Intranet connected to a global network (equivalent to the global network in Figure 1); and an IP address has been preset. A domain name server (DNS) 41 is provided within the network Z. In this example, the following explanation relates to a case of the mobile radio unit ML001 traveling in a communications area served by a radio base station of the routing server RSY3 managed by the mobile unit managing server MDBSY3, and receiving data from the host 42 of the network Z after authentication process has been carried out as described above.

First, the host 42 transmits a FQDN (for example, m1001.mdbsx2.providerx shown by notation "a") of the mobile radio unit ML001 as the destination, a data transmission request and the IP address of the host 42 to the DNS 41 (notation (1)). Upon receiving the FQDN of the mobile radio unit ML001 and the data transmission request and the IP address of the host 42 transmitted by the host 42, the DNS 41 determines whether or not the mobile radio unit ML001 is under its control according to the FQDN of the mobile radio unit ML001. At this time, domain name server 41 is not managing the mobile radio unit ML001 so that a response containing this information is transmitted to the host 42 (notation (2)).

Upon receiving the response information from the DNS 41 that the mobile radio unit ML001 is not under its control, the host 42 transmits the FQDN of the mobile radio unit ML001 and the data transmission request and the IP address of the host 42 to the communications system managing server 10 through the firewall FW31 (notation (3)).

The communications system managing server 10 temporarily holds the FQDN of the mobile radio unit ML001 and the data transmission request and the IP address of the host 42 transmitted by the host 42, and finds that, using the FQDN of the mobile radio unit ML001 as the key, the routing server that manages the mobile radio unit at the destination is the routing server RSY3, and that the mobile unit managing server that manages the routing server RSY3 is the mobile unit managing server MDBSY3.

Then, the communications system managing server 10 transmits, through the firewall FW21, the Mobile-FQDN (for example notation "b") of the mobile radio unit ML001 and the data transmission request to serve as the destination address resolution request (notations (4-1), (4-2)) to the mobile unit managing server MDBSY3 that manages the routing server RSY3.

Because the mobile radio unit ML001 is under the control of the routing server RSY3, the mobile unit managing server MDBSY3 transmits the data transmission request together with the Mobile-FQDN of the mobile radio unit ML001 as a traveling node information request to the routing server RSY3 (notation (5)).

Upon receiving the traveling node information request along with the FQDN of the mobile radio unit ML001 transmitted by the mobile unit managing server MDBSY3, since the mobile radio unit ML001 is under its control, the routing server RSY3 transmits to the firewall FW21 the Mobile-FQDN of the mobile radio unit ML001, the IP address allocated to the mobile radio unit ML001 by the routing server RSY3, the registration request for the IP address and a data reception response to indicate that it is able to transmit the transmission data addressed to the mobile radio unit ML001 to the mobile radio unit ML001 (notation (6)). Further, the routing server RSY3 transmits a traveling node information response to the mobile unit managing server MDBSY3, which notifies that the traveling node information request has been received and that the traveling node information response has been transmitted to the firewall FW21 (notation (5-1)). Here, in a case of relocation after last registration, information to notify that relocation after last registration has taken place is contained in the traveling node information response as updating information, such that registration is renewed when the traveling node information response is transmitted to the mobile unit managing server MDBSY3.

Upon receiving the Mobile-FQDN of the mobile radio unit ML001, the data reception response, the IP address allocated to the mobile radio unit ML001 by the routing server RSY3 and the registration request for the IP address from the routing server RSY3, the firewall FW21 converts the IP address of the mobile radio unit ML001 to a global IP address using the NAT capability, and using the global IP address as the sender address, transmits the Mobile-FQDN of the mobile radio unit ML001, the data reception response and the address registration request to Reg10 -1 having the global address registration capability through the firewall FW31 (notation (7)).

Upon receiving the global IP address of the mobile radio unit ML001, the Mobile-FQDN of the mobile radio unit ML001, the data reception response and the address registration request, Reg10-1 transmits the Mobile-FQDN of the mobile radio unit ML001 and the data reception response to the communications system managing server 10, using the global IP address of the mobile radio unit ML001 as the sender address (notation (8)). Then, global IP address of the mobile radio unit ML001 and the FQDN are correlated and stored in the communications system managing server 10.

On the other hand, after receiving the traveling node information response, the mobile unit managing server MDBSY3 transmits the Mobile-FQDN of the mobile radio unit ML001 and the destination address resolution response to the communications system managing server 10 through the firewalls FW21, 31 (notations (4-3), (4-4)).

Upon receiving the destination address resolution response and the Mobile-FQDN of the mobile radio unit ML001 from the mobile unit managing server MDBSY3, the communications system managing server 10 determines whether or not there is an IP address corresponding to the Mobile-FQDN of the mobile radio unit ML001. In this case, because the global IP address of the mobile radio unit ML001 is detected, the communications system managing server 10 transmits the global IP address of the mobile radio unit ML001 as a data transmission response to the host 42, through the firewalls FW31, the VPN router 31a, the global network 100, the VPN router 21a, firewall FW21 (notation (9)).

Upon receiving the data transmission response and the global IP address of the mobile radio unit ML001, the host 42 sets the global IP address of the mobile radio unit ML001 as the destination. Then, the destination is set in the destination of the transmission data to be transmitted to the mobile radio unit ML001, and transmits the packets to the firewall FW21 (notation (10)).

The firewall FW21, after converting the global IP address of the mobile radio unit ML001 set as the destination of the transmission data transmitted by the host 42 into a local address, transmits the transmission data transmitted by the host 42 to the routing server RSY3 (notation (11)).

The routing server RSY3, upon receiving the transmission data having the IP address of the mobile radio unit ML001 set as the destination of the transmission data from the firewall FW21, transmits the transmission data to the mobile radio unit ML001 (notation (12)).

By following the process described above, because the host 42 for receiving the transmission data is notified of the IP address of the mobile radio unit ML001, even when the mobile radio unit ML001 travels to a communications area of a routing server that is not under the control of the home mobile unit managing server of the mobile radio unit ML001, it enables transmission of the transmission data from a host that had no information at first about travel of the mobile radio unit ML001 into a communications area of the routing server that is not under the control of the home mobile unit managing server of the mobile radio unit ML001. Also, by so doing, it enables transmission of the transmission data to, for example, an information collection and storage device used in PCs, PDAs, telematics and the like, and to terminals used for remote -controlled automated inspection devices and the like.

Next, the communications system managing server 10 will be explained with reference to the drawings.

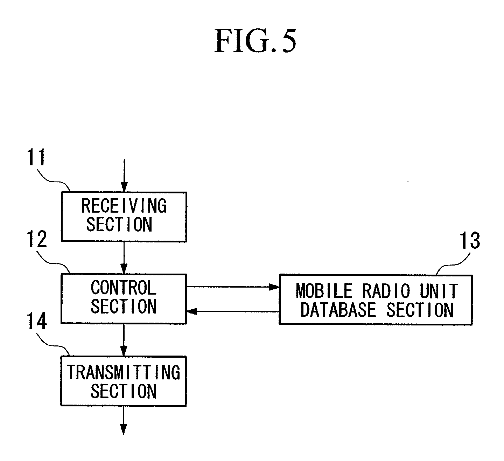

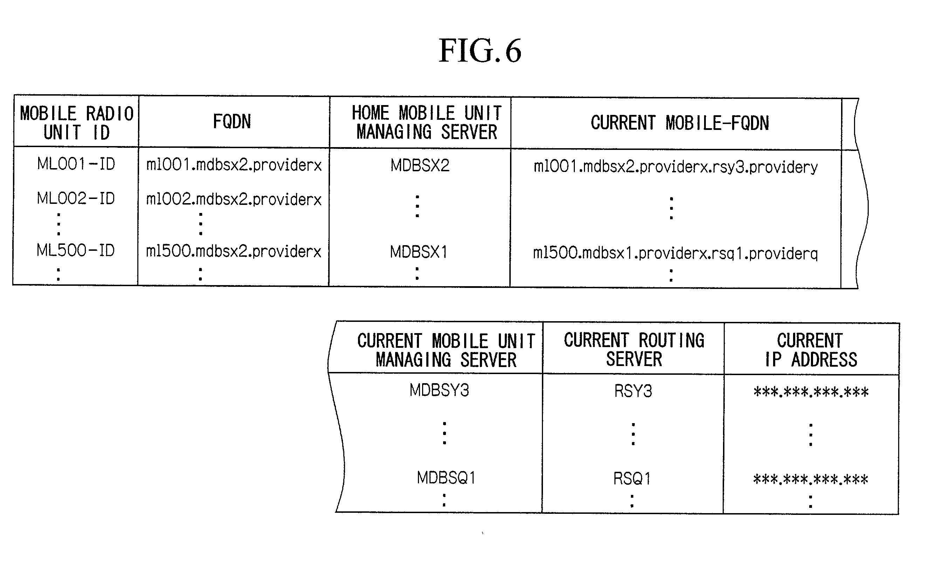

Figure 5 is a schematic block diagram of the structure of the communications system managing server 10. In this diagram, a receiving section 11 receives various transmitted requests, responses and information. A mobile radio unit database section13, for example, as shown in Figure 6, correlates and stores the IDs, the FQDNs, the Mobile-FQDNs, the IP addresses, the security information, home mobile unit managing server, current mobile unit managing server, and current routing server for each mobile radio unit that communicates through the network connected to the global network 100 (in this case, networks X and Y).

A control section 12, responding to requests, retrieves a home mobile unit managing server, currently-affiliated mobile unit managing server, currently-affiliated routing server, and the IP address, which are related to the mobile radio unit, in the mobile radio unit database section 13, using the ID and the FQDN as keys, as well as updates the contents stored in the mobile radio unit database section 13 to the latest sta tus, such as a Mobile-FQDN, currently-affiliated mobile unit managing server, currently-affiliated routing server, and the IP address, for each movement of a mobile radio unit from one routing server to another routing server. A transmitting section 14 tra nsmits various requests, responses, and information.

For example, when the communications system managing server 10 receives the FQDN of the mobile radio unit ML001 and a data transmission request from the host 42 with receiving section 11, since the received request is a data transmission request, the control section 12 retrieves a Mobile-FQDN corresponding to the FQDN of the mobile radio unit ML001 in the mobile radio unit database section 13, and finds that the currently-affiliated routing server is the routing server RSY3 and that the mobile unit managing server controlling the routing server RSY3 is the mobile unit managing server MDBSY3. Then, the communications system managing server 10 transmits the Mobile-FQDN of the mobile radio unit ML001 and the data transmission request to the mobile unit managing server MDBSY3 through the transmitting section 14.

Also, when the control section 12 of the communications system managing server 10 receives an authentication request through the receiving section 11 for the mobile radio unit ML001, it retrieves the home mobile unit managing server of the mobile radio unit ML001 in the mobile radio unit data base section 13, according to the ID of the mobile radio unit ML001.

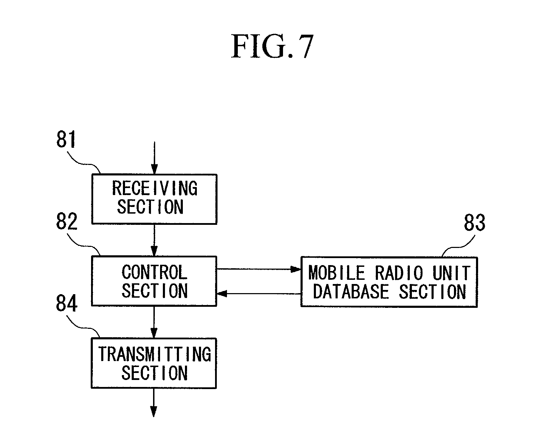

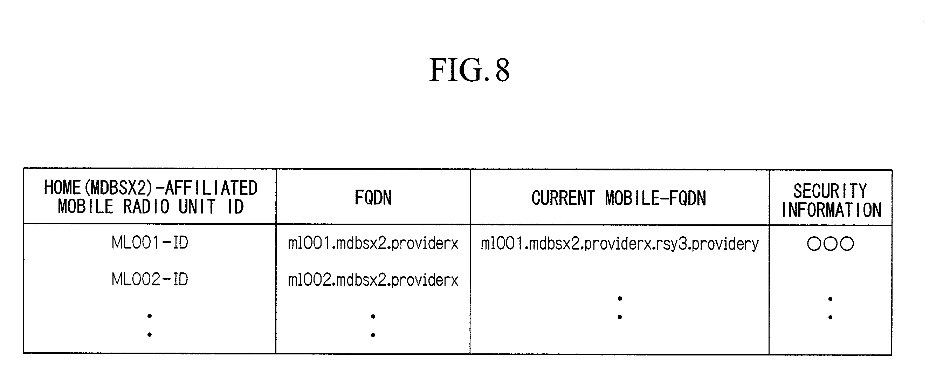

Next, the mobile unit managing server MDBSX2 will be explained with reference to the drawings. Figure 7 is a schematic block diagram of the structure of the mobile unit managing server MDBSX2. In this diagram, a receiving section 81 receives various transmitted requests, responses and information. A mobile radio unit database section 83, as shown in Figure 8, stores the IDs, the FQDNs, the current Mobile-FQDNs, the security information of mobile radio units that are affiliated with the mobile unit managing server MDBSX2 itself as their home mobile unit managing server. A transmitting section 84 transmits various requests, responses, and information.

Next, the control section 82 will be explained. For example, when the mobile unit managing server MDBSX2 receives an authentication request for a mobile radio unit ML001 from the communications system managing server 10, the control section 82 confirms whether or not the mobile radio unit is under its control, using the received ID of the mobile radio unit ML001 as the key, in the mobile radio unit database section 83. If, as a result of confirmation, it is determined that the mobile radio unit ML001 is under its control, a Mobile-FQDN is created to show the current association by linking the pre-stored FQDN of the mobile radio unit ML001 and the FQD N of currently-affiliated routing server, and updates the content of the Mobile-FQDN in the mobile radio unit database section 83 of the mobile radio unit ML001. Then, a response containing the authentication data showing that the mobile radio unit is one of its own and the Mobile-FQDN of the mobile radio unit ML001 are transmitted to the communications system managing server 10. On the other hand, if the results of the determination shows that the mobile radio unit is not one of its own, a response contain ing the authentication data showing that the mobile radio unit is not one of its own and the ID of the mobile radio unit ML001 are transmitted. Also, when a security information request for the mobile radio unit ML001 is received, the security information for the mobile radio unit ML001 is detected in a similar manner using the ID as the key in the mobile radio unit database section. In the preceding, operation of the communications system managing server 10 was explained concerning the mobile radio unit ML001, but similar process are performed for mobile radio units that are affiliated with the mobile unit managing server MDBSX2 as their home mobile unit managing server.

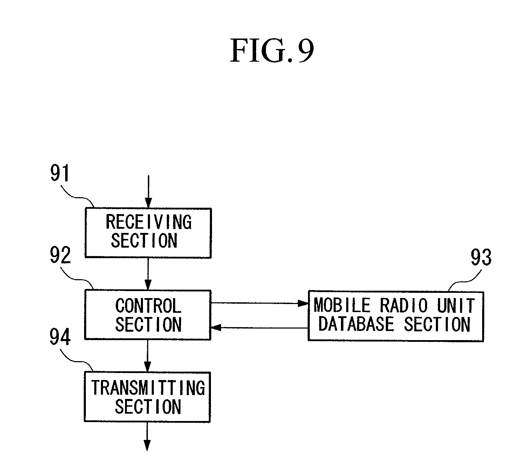

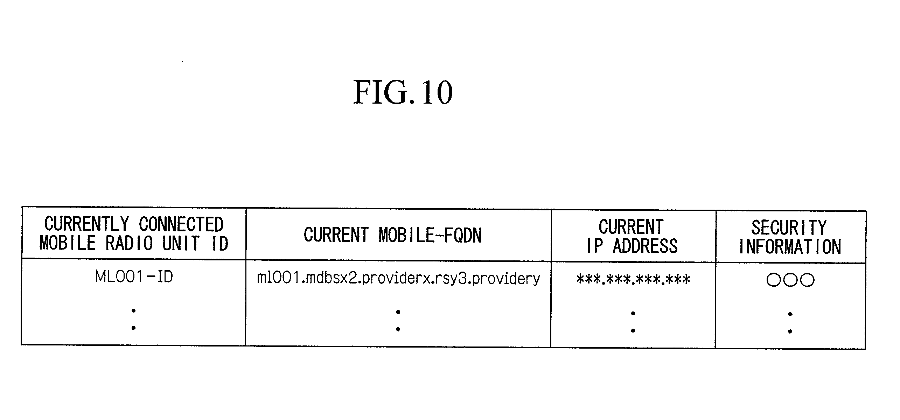

Next, the routing server RSY3 will be explained with reference to the drawings. Figure 9 is a schematic block diagram of the structure of the routing server RSY3. A receiving section 91 receives various requests, responses and information. A mobile radio unit database section 93, as shown in Figure 10, stores the IDs, the Mobile-FQDNs, the IP addresses, the security information of currently connected mobile radio units. The transmitting section 94 transmits various requests, responses and information. Next, the control section 92 will be explained. For example, when a registration request is transmitted by the mobile radio unit ML001, the control section 92 attaches an authentication request and a FQDN of RSY3 itself to the ID of the mobile radio unit ML001, and transmits the packet to the mobile unit managing server MDBSY3 that controls the routing server RSY3. Also, when the authentication data is transmitted by the mobile unit managing server MDBSY3, the database section 93 is updated to the received Mobile-FQDN of the mobile radio unit ML001 and the results are stored, and an IP address is allocated to the mobile radio unit ML001, and a registration permission and the IP address are transmitted to the mobile radio unit ML001. This is followed by transmitting the security information on the mobile radio unit ML001, and the security information contained in the response is correlated to the ID, the Mobile-FQDN, the IP address of the mobile radio unit ML001 and is stored in the database section 93. Also, when the mobile radio unit ML001 communicates with another mobile radio unit or a host, ac cording to the security information in the database section 93, it is controlled whether communication is allowed or not.

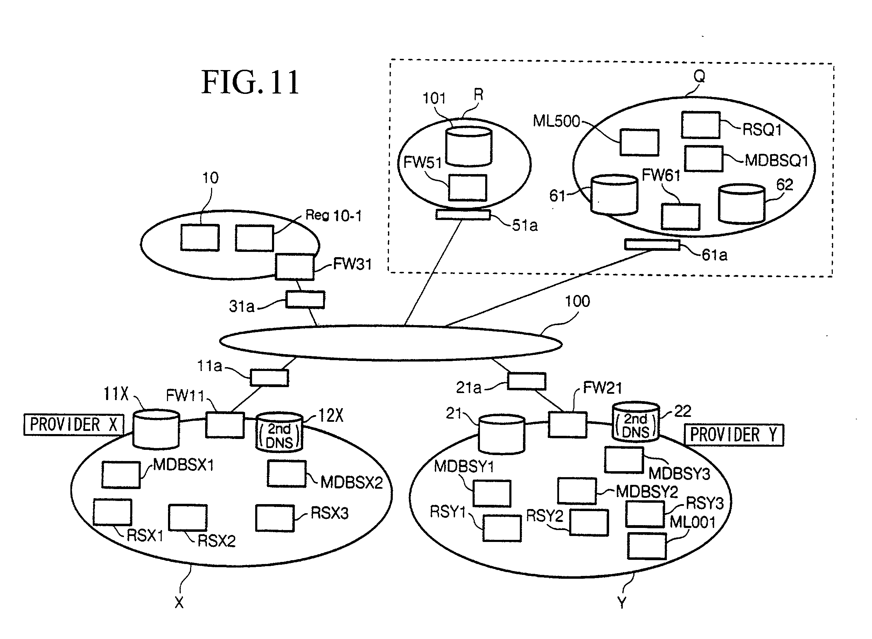

Next, another embodiment of the present invention in the first viewpoint will be explained. Figure 11 is a diagram of the structure of the communications system in this embodiment. In this diagram, parts that correspond to those in Figure 1 are given the same reference numbers, and their explanations are omitted.

In this diagram, reference number 51a refers to a VPN router connected between a network R and the global network 100, and 61a refers to a VPN router connected between a network Q and the global network 100.

Afirewall FW51 is provided in the network R, and a firewall FW61 is provided in the network Q.

The reference number 61 refers to a domain name system (DNS) server, and 62 refers to a secondary domain name system (DNS) server for assisting DNS server 61. A routing server RSQ1 is connected to the firewall FW61 through a mobile unit managing server MDBSQ1. ML500 is a mobile radio unit currently connected to the routing server RSQ1 and is given a FQDN represented by m1500.mdbsx1.providerx.

The reference number 101 refers to a domain name system (DNS) server, and the DNS server 101 is connected to firewall FW51 in the network R.

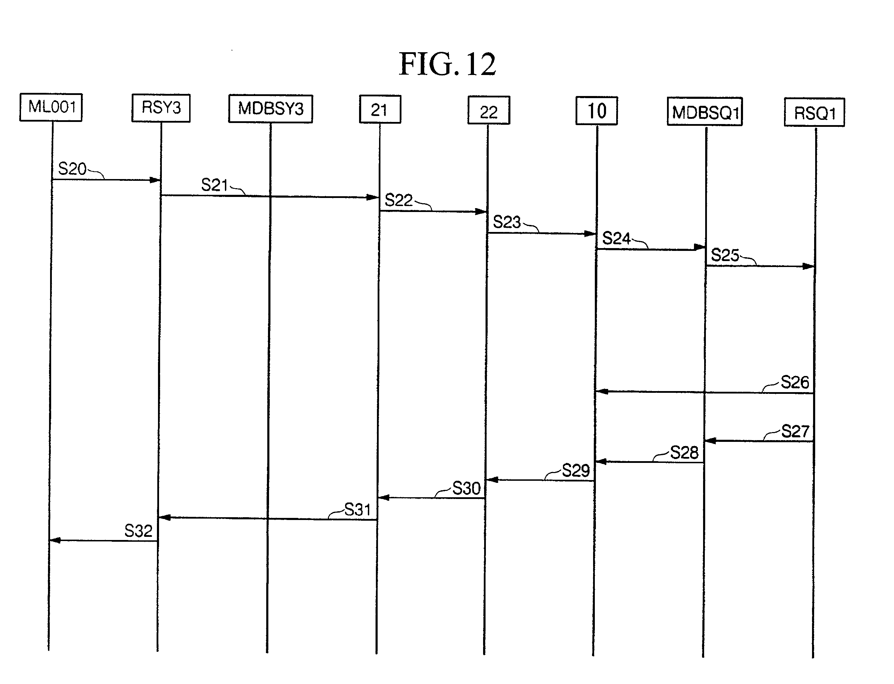

This embodiment relates to the process of the destination address resolution for the mobile radio unit ML500, after the mobile radio unit ML001 has traveled from the network X to the network Y and has established communication with the routing server RSY3, and the process will be explained with reference to Figures 11 and 12. Figure 12 is a diagram for explaining the operational sequence of the communications system. In this example, it is assumed that the mobile radio unit ML500 has traveled to a communications area served by the routing server RSQ1, and that its authentication process for the routing server RSQ1 has been completed.

First, the mobile radio unit ML001 transmits a FQDN of the mobile radio unit ML500, for which the destination address has to be resolved, and a destination address resolution request and the IP address of the mobile radio unit ML001 to the routing server RSY3 (step S20).

Upon receiving the FQDN of the mobile radio unit ML500 and the destination address resolution request and the IP address of the mobile radio unit ML001, the routing server RSY3 transmits the FQDN of the mobile radio unit ML500 and destination address resolution request and the IP address of the mobile radio unit ML001 to the DNS 21 (step S21).

Upon receiving the FQDN of the mobile radio unit ML500 and destination address resolution request and the IP address of the mobile radio unit ML001 from the routing server RSY3, the DNS 21 temporarily holds the FQDN of the mobile radio unit ML500 and destination address resolution request and the IP address of the mobile radio unit ML001, and determines whether or not the mobile radio unit ML500 is under its control according to the received FQDN of the mobile radio unit ML500. In this case, because the mobile radio unit ML500 is not under its control, the DNS 21 transmits the temporarily-held FQDN of the mobile radio unit ML500 and the destination address resolution request and the IP address of the mobile radio unit ML001 to the secondary DNS 22 (step S22).

Upon receiving the FQDN of the mobile radio unit ML500 and the destination address resolution request and the IP address of the mobile radio unit ML001, the DNS 22 temporarily holds the received FQDN of the mobile radio unit ML500 and destination address resolution request and the IP address of the mobile radio unit ML001, and determines whether or not the mobile radio unit ML500 is under its control according to the FQDN of the mobile radio unit ML500. In this case, because the mobile radio unit ML500 is not under its control, the DNS 22 transmits the temporarily -held FQDN of the mobile radio unit ML500 and the destination address resolution request and the IP address of the mobile radio unit ML001 to the communications system managing server 10 through the firewall FW21, the VPN router 21a, the global network 100, the VPN router 31a, and the firewall FW31 (step S23).

The communications system managing server 10 temporarily holds the FQDN of the mobile radio unit ML500 and the destination address resolution re quest and the IP address of the mobile radio unit ML001 transmitted by the DNS 22, and finds that the routing server managing the traveling mobile radio unit ML500 is the routing server RSQ1 according to the FQDN of the mobile radio unit ML500, and finds t hat the mobile unit managing server managing the routing server RSQ1 is the mobile unit managing server MDBSQ1 and that the current Mobile-FQDN is m1500.mdbsx.providerx.rsq1.providerq, for example.

Then, the communications system managing server 10 transmits the detected Mobile-FQDN for the mobile radio unit ML500 and the destination address resolution request to the mobile unit managing server MDBSQ1 that manages the routing server RSQ1, through the firewall FW31, the VPN router 31a, the global network 100, the VPN router 61a, and the firewall 61 (step S24).

Upon receiving the Mobile-FQDN of the mobile radio unit ML500 and the destination address resolution request from the communications system managing server 10, the mobile unit managing server MDBSQ1 is able to detect that the mobile radio unit ML500 is under the control of the routing server RSQ1 because the Mobile-FQDN contains "rsq1", so that the destination address resolution request is transmit ted to the routing server RSQ1 together with the Mobile-FQDN of the mobile radio unit ML500 as the traveling node information request (step S25).

Upon receiving the Mobile-FQDN of the mobile radio unit ML500 and the traveling node information request from the mobile unit managing server MDBSQ1, and after searching the mobile radio unit database section, the mobile routing server RSQ1 transmits an address registration request and the Mobile-FQDN of the mobile radio unit ML500 and the detected IP address, to the firewall FW61.

Upon receiving the address registration request and the Mobile-FQDN of the mobile radio unit ML500 and the detected IP address from the routing server RSQ1, the firewall FW61 allocates a global IP address to the mobile radio unit ML500 using the NAT capability, and designating the allocated global IP address of the mobile radio unit ML500 as the sender address, the Mobile-FQDN of the mobile radio unit ML500 is transmitted to Reg10-1 through the VPN router 61a, the global network 100, the VPN router 31a, the firewall FW31, and Reg10-1 further transmits the packets to the communications system managing server 10. By so doing, the IP address of the mobile radio unit ML500 is made known to the communications system managing server 10, so that the global IP address of the mobile radio unit ML500 and the Mobile-FQDN are correlated and stored in the communications system managing server 10 (step S26).

On the other hand, the routing server RSQ1 further transmits a traveling node information response, stating that the traveling node information request has been received and the address registration request has been transmitted to firewall FW21, and the Mobile-FQDN of the mobile radio unit ML500 to the mobile unit managing server MDBSQ1 (step S27).

Upon receiving the traveling node information response and the Mobile-FQDN of the mobile radio unit ML500 from the routing server RSQ1, the mobile unit managing server MDBSQ1 transmits the traveling node information response and the Mobile-FQDN of the mobile radio unit ML500 transmitted by the routing s erver RSQ1 to the communications system managing server 10, through the VPN router 61a, the global network 100, the VPN router 31a, the firewall FW31 (step S28).

Upon receiving the destination address resolution response and the Mobile-FQDN of the mobile radio unit ML500 from the mobile unit managing server MDBSQ1, the communications system managing server 10 transmits the global IP address of the mobile radio unit ML500 to serve as the destination address resolution response to the DNS 22, through the firewall FW31, the VPN router 31a, the global network 100, the VPN router 21a, and firewall 21 (step S29).

Upon receiving the global IP address of the mobile radio unit ML500 as the destination address resolution response from the communications system man aging server 10, the DNS 22 transmits the received global IP address of the mobile radio unit ML500 to the DNS 21 as the destination address resolution response (step S30).

Upon receiving the global IP address of the mobile radio unit ML500 as the destination address resolution response from the DNS 22, the DNS 21 transmits the received global IP address of the mobile radio unit ML500 to the routing server RSY3 as the destination address resolution response (step S31).

Upon receiving the global IP address of the mobile radio unit ML500 as the destination address resolution response, the routing server RSY3 transmits the received global IP address of the mobile radio unit ML500 to the mobile radio unit ML001 as the destination address resolution response (step S32).

By following the process described above, the mobile radio unit ML001 is informed of the global IP address of the traveling mobile radio unit ML500. Accordingly, the mobile radio unit ML001 is able to transmit the transmission data and the like to the mobile radio unit ML500.

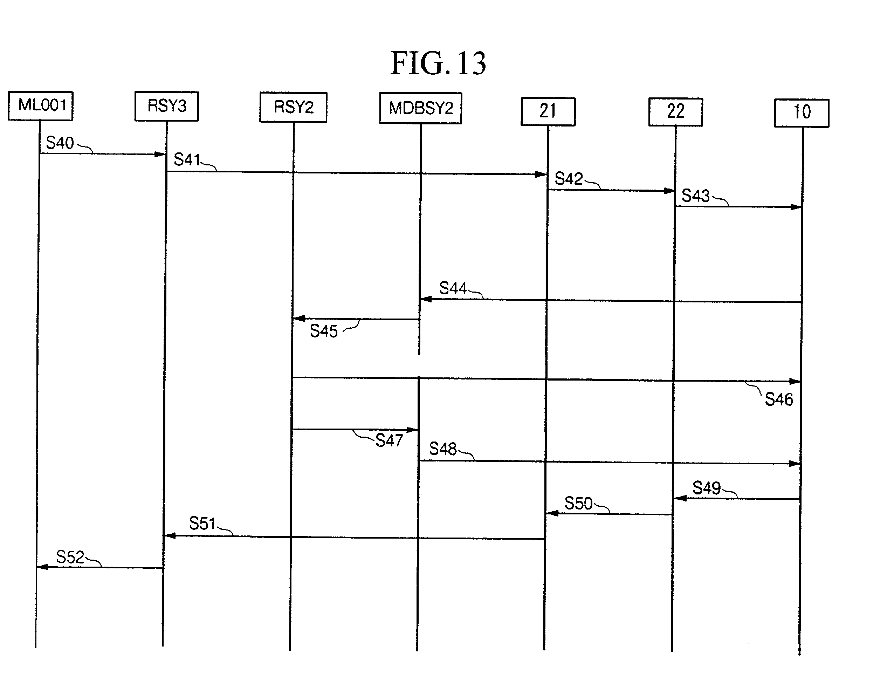

Next, still another embodiment of the present invention in the first viewpoint will be explained. In this embodiment, a case relates to a mobile radio unit ML001 affiliated with the routing server RSY3 making a destination address resolution request for a mobile radio unit ML500 that has traveled into the same network as the mobile radio unit ML001, and the case will be explained with reference to Figures 11 and 13. Figure 13 is a diagram to explain the operational sequence of the communications system of still another embodiment. In this embodiment, it is assumed that the mobile radio unit ML500 has traveled into a communications area of routing server RSY2 and that the authentication process to routing server RSY2 has been completed.

First, the mobile radio unit ML001 transmits a FQDN (m1500.mdbsx1.providerx, for example) of the mobile radio unit ML500, for which the destination address has to be resolved, and a destination address resolution request and the IP address of the mobile radio unit ML001 to the routing server RSY3 (step S40). After the step S40, similar to the steps S21-S23 described in Figure 12, the FQDN of the mobile radio unit ML500, the destination address resolution request and the IP address of the mobile radio unit ML001 are transmitted to the communications system managing server 10 (steps S41, S42, S43)

Upon receiving and temporarily holding the FQDN of the mobile radio unit ML500, destination address resolution request and the IP address of the mobile radio unit ML001 transmitted by the DNS 22, the communications system managing server 10 searches the mobile radio unit database section, using the FQDN of the mobile radio unit ML500 as the key, finds that the routing server managing the traveling mobile radio unit ML500 is a routing server RSY2, and finds that the mobile unit managing server that controls the routing server RSY2 is a mobile unit managing server MDBSY2 and that the Mobile-FQDN to show the current association is m1500.mdbsx1.providerx.rsy2.providery, for example.

Then, the communications system managing server 10 transmits the detected Mobile-FQDN of the mobile radio unit ML500 and the destination address resolution request to the mobile unit managing server MDBSY2 that manages the routing server RSY2 (step S44).

After the step S44, similar to the steps S25 -S28 in Figure 12, the destination address resolution request as the traveling node information request, together with the Mobile-FQDN of the mobile radio unit ML500, is transmitt ed from the mobile unit managing server MDBSY2 to the routing server RSY2 (step S45), and the registration request of an IP address allocated by the routing server RSY2 and the Mobile-FQDN of the mobile radio unit ML500 are transmitted from routing server RSY2 using the allocated IP address as the sender address to the communications system managing server 10 (the IP address of the mobile radio unit ML500 has been converted to the global IP address by the firewall FW21) (step S46), and the traveling node information response and the Mobile-FQDN of the mobile radio unit ML500 are transmitted from the routing server RSY2 to the mobile unit managing server MDBSY2 (step S47).

Upon receiving the destination address resolution response and the Mobile-FQDN of the mobile radio unit ML500 from the mobile unit managing server MDBSY2 (step S48), similar to steps S29-S32, the communications system managing server 10 transmits the global IP address of the mobile radio unit ML500 to serve as the destination address resolution response to the mobile radio unit ML001, through the DNS 22, the DNS 21, and the routing server RSY3 (step S49, S50, S51, S52).

Accordingly, even when a host as a target of a destination address resolution is connected to the same network as the requesting mobile radio unit, an IP address of a routing server connected to the host is delivered to the mobile radio unit requesting destination address resolution.

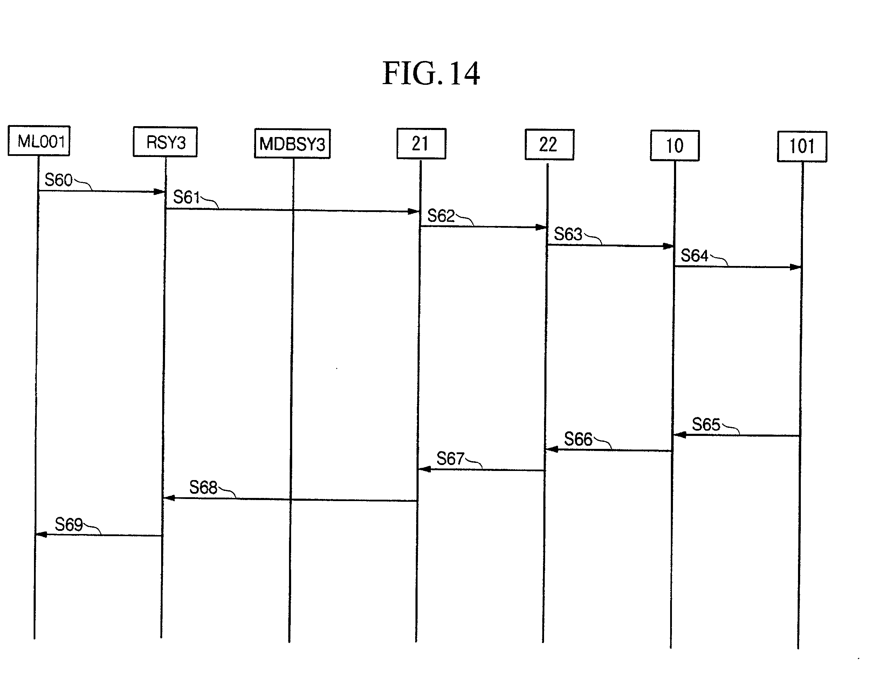

Next, another embodiment of the present invention in the first viewpoint will be explained. In this embodiment, a case relates to the destination address resolution process for a host connected to a general Intranet, and will be explained with reference to Figure 14. Figure 14 is a diagram to explain the operational sequence of the communications system this embodiment. In this embodiment, it is assumed that the host is connected to a DNS server 101.

First, similar to the steps S20-S23 in Figure 12, the mobile radio unit ML001 transmits the FQDN of the host which is the target of the destinati on address resolution and a destination address resolution request and an IP address of the mobile radio unit ML001 to the communications system managing server 10, through the routing server RSY3, the DNS 21, and the DNS 22 (steps S60, S61, S62, S63).

Upon receiving a domain name which is the destination address resolution target and the destination address resolution request and the IP address of the mobile radio unit ML001, the communications system managing server 10 temporarily holds the FQDN of the destination address resolution target and the destination address resolution request and the IP address of the mobile radio unit ML001, and finds that the host is affiliated with the DNS server 101 according to the FQDN of the destination address resolutio n target, and transmits the FQDN of the destination address resolution target and the destination address resolution request to the DNS server 101 (step S64).

Upon receiving the FQDN of the host and the destination address resolution request, the DNS server 101 transmits the IP address of the host to serve as the destination address resolution response to the communications system managing server 10 through a firewall FW51 (step S65). By so doing, the global IP address of the host as the target for the destination address resolution is made known to the communications system managing server 10.

Then, when the association of the host as the target for the destination address resolution is notified to the communications system managing server 10, similar t o the steps S29-S32, the global IP address of the host as destination address resolution response is transmitted from the communications system managing server 10 to the mobile radio unit ML001, through the DNS 22, the DNS 21, and the routing server RSY3 (steps S66, S67, S68, S69).

According to the embodiment explained above, the destination address resolution process is carried out in a host connected to a general Intranet by following the process described above.

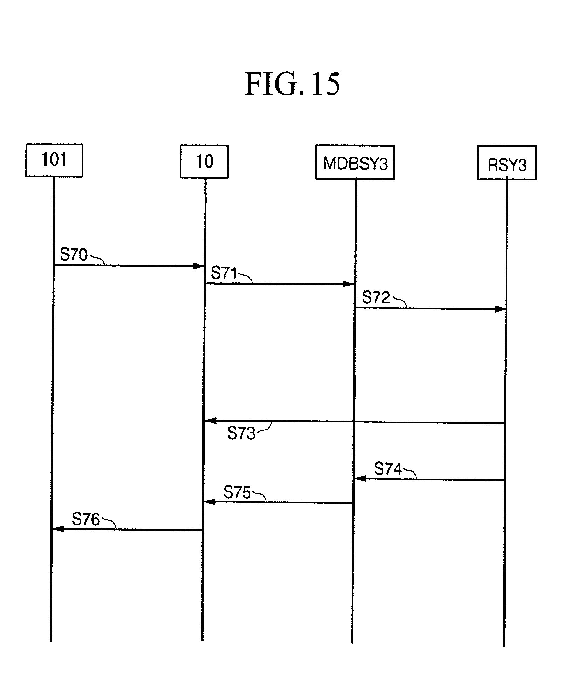

Next, still another embodiment of the present invention in the first viewpoint will be explained. In this embodiment, a case relates to a host connected to a general Intranet making a destination address resolution request for a mobile radio unit ML001 connected to the routing server RSY3 will be explained with reference to Figure 15. Figure 15 is a diagram to explain the operational sequence of this embodiment. In this example, it is assumed that the host is connected to the DNS server 101.

First, upon receiving a FQDN of the mobile radio unit ML001 as the target for the destination address resolution and a destination address resolution request and an IP address of the original requester, the DNS server 101 transmits the FQDN of the mobile radio unit ML001 and the received destination address resolution request and the IP address of the original requester to the communications system managing server 10 (step S70).

After the FQDN of the mobile radio unit ML001 and the destination address resolution request and the IP address of the requester are transmitted to the communications system managing server 10, similar to the steps S24-S26, the communications system managing server 10 temporarily holds the FQDN of the mobile radio unit ML001 and the destination address resolution request and the IP address of the requester, and finds that the host is affiliated with the routing server RSY3 according to the FQDN of the mobile radio unit ML001, so that the FQDN of the mobile radio unit ML001 and the destination address resolution request are transmitted to the mobile unit managing server MDBSY3 (step S71). Then, the FQDN of the mobile radio unit ML001 and the traveling node information request are transmitted from the mobile unit managing server MDBSY3 to the routing server RSY3 (step S72). The IP addre ss and the Mobile-FQDN of the mobile radio unit ML001 and an address registration request are transmitted from the routing server RSY3 to the communications system managing server 10 (step S73).

Then, a traveling node information response and the Mobile-FQDN of the mobile radio unit ML001 are transmitted from the routing server RSY3 to the mobile unit managing server MDBSY3 (step S74), and a global IP address of the mobile radio unit ML001 to serve as the destination address resolution response are transmitted from the mobile unit managing server MDBSY3 to the DNS server 101 through the communications system managing server 10 (steps S75 and 76).

Accordingly, the destination address resolution process is carried out from a network such as a common Intranet to a mobile radio unit.

Here, in the embodiments described above, the mobile unit managing server and the routing server are described as separate entities, however the routing server may have a capability as a mobile unit managing server to be provided a single unit. Also, the radio base station and the routing server may be combined into a single unit.

Also, the functions of the communications system managing server shown in Figure 1 may be performed by recording application programs for performing the processes, and loading the programs in a computer system to manage FQDNs of mobile radio units. The computer system, in this context, includes any operating systems (OS) and peripheral hardware.

Also, the computer system may also include the use of wo rld wide webs and home page portals.

Also, computer readable recording media include portable media such as floppy disks, opto-magnetic disks, ROMs, CD-ROMs, as well as fixed devices such as hard disks housed in computer systems. The computer readable recording media further include short-term dynamic memories (transmission media inclusive of wave signals) used in transmitting applications through such means as networks such as the Internet or telephone circuits, as well as other short-term memories such as volatile memories used in servers and client computer systems. The application programs may perform a part of the described capabilities, or may be operated in conjunction with pre-recorded programs stored in computer systems.

The embodiments in the present invention have been described above in detail with reference to the drawings, but the specific structures are not limited to those disclosed in the embodiments, and include any designs within the scope of the present invention.

In the following, an embodiment of the routing server in the present invention in the second viewpoint will be explained with reference to the drawings.

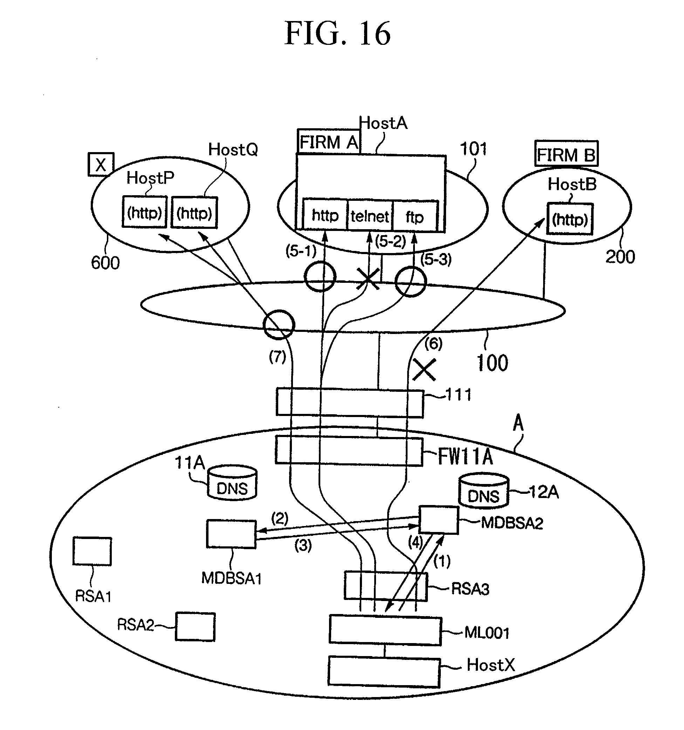

Figure 16 is a schematic block diagram of a radio communications system based on a routing server in the embodiment.

In this diagram, a network A is connected to the global network 100 through a firewall FW 11A having a NAT (network address translation) capability and a VPN router 111 having a VPN (virtual private network) capability.

A mobile unit managing server MDBSA1 manages the IDs and the IP addresses of routing servers RSA1-RSA2 and radio base stations (not shown) under its control, and manages also the ID, the Mobile-FQDN, the FQDN, and the security information of a mobile radio unit ML001 associated therewith as a home mobile unit managing server. A mobile unit managing server MDBSA2 manages the IDs and the IP addresses of a routing server RSA3 and radio base stations (not shown) under its control, and manages also the ID, the Mobile-FQDN, the FQDN, and the security information of mobile radio units associated therewith as its home mobile unit managing server.

RSA1, RSA2, and RSA3 are routing servers, and each is in contact with at least one radio base station to provide routing of IP packets. Furthermore, these rout ing servers RSA1, RSA2 and RSA3 store security information of mobile radio units currently connected to each server by obtaining the security information from the respective home mobile unit managing servers, and controls whether or not to permit communica tion of these mobile radio units with information communications device s at respective destinations based on the contents of the security information. In this example, the routing servers RSA1 and RSA2 are under the control of the mobile unit managing server MDBSA1 and the routing server RSA3 is under the control of the mobile unit managing server MDBSA2. Domain name servers 11A and 12A convert domain names to the IP addresses.

The mobile radio unit ML001 is connected to an information terminal HostX such as a computer or a PDA and is connected to the routing server RSA3 through the radio base station. Also, this mobile radio unit ML001 is provided with a preset identifier (the ID). In this example, it is assumed that the mobile unit managing server MDBSA1 is a home mobile unit managing server for the mobile radio unit ML001.

An information communications device HostA has capabilities for HTTP (hypertext transfer protocol), Telnet, and FTP (file transfer protocol), and is connected to a network 101 which is connected to the global network 100. The network 101 is utilized by a firm A.

An information communications device HostB has HTTP capability and is connected to a network 200 which is connected to the global network 100. This network 200 is utilized by a firm B. Information communications devices HostP and HostQ have HTTP capabilities and are disposed within a communication region X that allows access to the global network 100.

The global network 100 is, for example, a network such as the Internet.

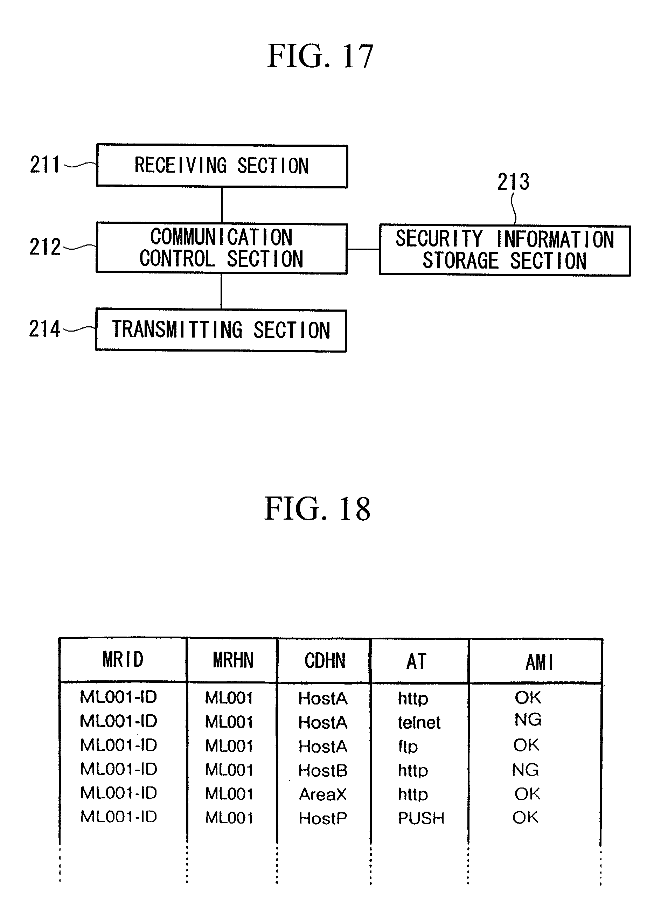

Next, the structure of the routing server RSA3 in Figure 16 will be explained with reference to Figure 17. Figure 17 is a schematic block diagram of the structure of the routing server RSA3. In this diagram, a security information storage section 213 stores the security information to determine whether or not to permit the mobile radio units under its control (the mobile radio unit ML001, for example) to communicate with destination communications devices or information communications devices which are connected to the network A or the global network 100. The "destination communications device" in this case refers to a device at a destination that enables transmission and reception of data to and from the mobile radio unit through a routing server, and relates, for example, to a server or a portable terminal.

An example of the security information stored in the security information storage section 213 is shown in Figure 18. As shown in the diagram, the security information contains the IDs and the host names of the mobile radio units to identify them (MRID and MRHN in Figure 18); the host names of the information communications devices to identify these destination devices (CDHN in Figure 18); protocols for connecting to the information communications devices; an access type information for determining the type of communication services and communication capabilities (AT in Figure 18); an access managing information to determine whether or not to permit the mobile radio units and the information communications devices to be connected (AMI in Figure 18) which are related to each other.

Here, the access type is given, for example, by "http" to specify the use of HTTP for communication; "ftp" to specify the use of FTP for communication, "ALL" to specify all types of accessing; "PUSH" to specify data transmission according to PUSH protocol; The access managing information includes "OK" to permit connection between the mobile radio unit and the information communications device and "NG" to deny connection between the mobile radio unit and the information communications device.

The information communications device refers to a device as a communications partner capable of transmitting or receiving data through a routing server, and refers to a server or a portable terminal, for example.

Here, in Figure 18, the security information is shown only for a mobile radio unit having a host name ML001, but the security information storage section of a routing server stores the security information on all the mobile radio units that are under the control of the routing server.

When it is necessary to establish communication between a mobile radio unit and an information communications device, a communication control section 212 controls whether or not to establish communication between the mobile radio unit and the information communications device, based on the security information stored in the security information storage section 213.

A receiving section 211 receives various data transmitted from external devices.

A transmitting section 214 transmits various data to external devices.

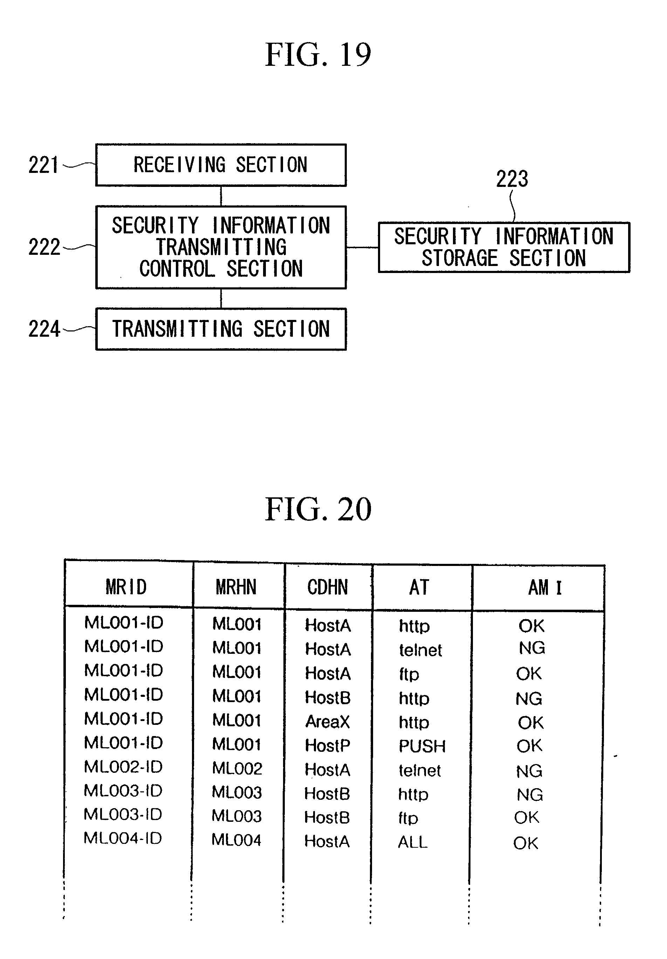

Next, the mobile unit managing server MDBSA1 shown in Figure 16 will be explained with reference to the diagrams. Figure 19 is a schematic block diagram of the structure of the mobile unit managing server MDBSA1. In this diagram, the security information transmitting control section 222 is operated when the mobile radio unit ML001 travels and attempts to connect to a different routing server for connection. In response to a security information request transmitted from the connected routing server, the security information transmitting control section 222 accesses the security information on the mobile radio unit ML001 stored in a security information storage section 223, and the obtained security information is transmitted to the routing server which is to be connected to the mobile radio unit ML001.

Also, when the mobile unit managing server MDBSA1 receives an authentication request for the mobile radio unit ML001, for example, from a communi cations system managing server (not shown), the security information transmitting control section 222 determines whether or not the mobile radio unit ML001 is under its control. If the results indicate that the mobile radio unit ML001 is under its control, a Mobile-FQDN is created to show the current association by linking the FQDN of the mobile radio unit ML001 and the FQDN of currently-affiliated routing server, and the result is stored in a specific memory location. Furthermore, the authentication data t o show that the mobile radio unit ML001 is under its control and the Mobile-FQDN and the ID of the mobile radio unit ML001 are transmitted to the communications system managing server. Also, if the result shows that the mobile radio unit is not under its control, the authentication data to show that the mobile radio unit is not under its control and the ID of the mobile radio unit ML001 are returned. Accordingly, the Mobile-FQDN enables communication with a host connected to the global network 100 even when the mobile radio unit is connected to a routing server connected to a mobile unit managing server that is not its home mobile unit managing server.

The security information storage section 223 stores the security information to show whether or not to permit communication between a mobile radio unit and an information communications device at a destination for each mobile radio unit that has the mobile unit managing server MDBSA1 as its home server.

An example of the security information stored in the security information storage section 223 is shown in Figure 20. As shown in this diagram, the security information correlates and stores the IDs of the mobile radio units (MRID) and the host names whose mobile unit managing server is the mobile unit managing server MDBSA1 (MRHN) and the host names for identifying information communications device at the destination (CDHN) and the access type (AT) and access managing information (AMI).

Here, in Figure 20, the security information for mobile radio units ML001-ML004 that are controlled by the mobile unit managing server MDBSA1 as its home mobile unit managing server. A receiving section 221 receives various data transmitted from external devices. A transmitting section 224 transmits various data to external devices.

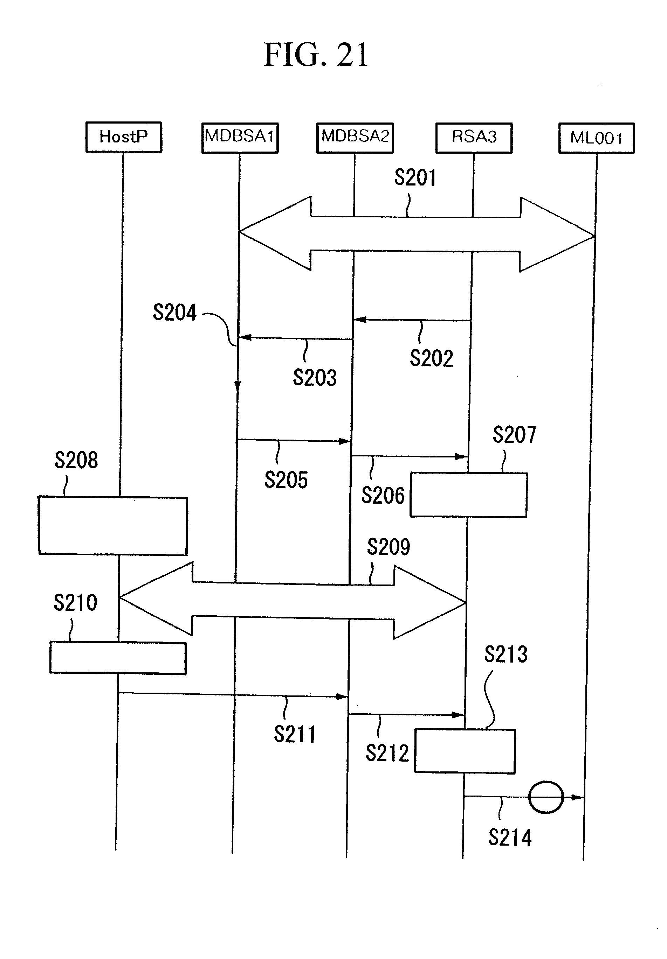

Next, the operation of the routing server shown in Figure 16 will be explained with reference to the drawings. In this example, communication is started after the security information for the mobile radio unit ML001 has been clarified. Figure 21 is a flowchart to explain the operation of the routing server in this embodiment.

First, when the mobile radio unit ML001 is powered, the mobile radio unit ML001 notifies the routing server RSA3 located within the communicable range by transmitting its ID and a registration request. The request prompts the mobile radio unit ML001 and the routing server RSA3 and the mobile unit managing server MDBSA2 that controls the routing server RSA3 and the mobile unit managing server MDBSA1 which is the home mobile unit managing server for the mobile radio unit ML001 to take part in the registration authentication process of the mobile radio unit ML001 (step S201) so that the mobile radio unit ML001 is able to communicate inside the communications area controlled by the routing server RSA3. The registration authentication process enables the routing server RSA3 to remember that the mobile radio unit ML001 is under its control, and the mobile unit managing server MDBSA2 to remember that the mobile radio unit ML001 is being controlled by the routing server RSA3 which is under the control of the mobile unit managing server MDBSA2.

Next, when the registration authentication process is completed, the routing server RSA3 transmits the ID of the mobile radio unit ML001 and a security information request of the mobile radio unit ML001, which are transmitted by the mobile radio unit ML001 during the registration authentication process, to the mobile unit managing server MDBSA2 (step S202). The mobile unit managing server MDBSA2 transmits the ID of the mobile radio unit ML001 and the security information request of the mobile radio unit ML001 transmitted by the routing server RSA3 further to the mobile unit managing server MDBSA1 (step S203).

Upon receiving the ID of the mobile radio unit ML001 and the security information of the mobile radio unit ML001 from the mobile unit managing server MDBSA2 through the receiving section 221, the mobile unit managing server MDBSA1 reads the security information for the mobile radio unit ML001 from the security information storage section 223 using the security information transmitting control section 222 according to the ID of the mobile radio unit ML001 (step S204), and attaches the ID of the mobile radio unit ML001 to the security information of the mobile radio unit ML001 to specify the destination and transmits these to the mobile unit managing server MDBSA2 (step S205). The mobile unit managing server MDBSA2 transmits the ID of the mobile radio unit ML001 and the security information for the mobile radio unit ML001 transmitted by the mobile unit managing server MDBSA1 to the routing server RSA3 (step S206).

Upon receiving the ID of the mobile radio unit ML001 and the security information for the mobile radio unit ML001 through the receiving section 211, the communication control section 212 of the routing server RSA3 stores the received security information in the security information storage section 213 (step S 207). Accordingly, the routing server RSA3 is able to set the security information for the mobile radio unit ML001 by receiving and storing the security information transmitted from the mobile unit managing server MDBSA1 which is the home mobile unit managing server for the mobile radio unit ML001.

Next, after the security information has been entered in the routing server RSA3, a case will be considered of transmitting the transmission data using the PUSH protocol from the information communications device HostP located within the communication region X.

The information communications device HostP specifies a host name of the mobile radio unit ML001 and transmits a data transmission request, through the global network 100, the VPN router 111, the firewall FW11A, and the DNS server 11A, to the mobile unit managing server MDBSA1 which is the home mobile unit managing server for the mobile radio unit ML001 (step S208). The mobile unit managing server MDBSA1 is aware that the mobile radio unit ML001 is under the control of the routing server RSA3 because of the registration authentication process in step S201. Therefore, the mobile unit managing server MDBSA1 carries out destination address resolution process (step S209), and by so doing, the address of the mobile radio unit ML001 is notified to the information communications device HostP so as to enable data to be transmitted from the information communications device HostP to the mobile radio unit ML001, through the mobile unit managing server MDBSA1 and the mobile unit managing server MDBSA2 and the routing server RSA3.

When the address of the mobile radio unit ML001 is notified from the mobile unit managing server MDBSA1, the information communications device HostP enters the received destination and the host name "HostP" to show the original sender and the host name of the mobile radio unit ML001 and the access type of "PUSH" in the transmission data (step S210), and transmits this transmission data. The transmission data transmitted from the information communications device HostP is transmitted to the routing server RSA3, based on the destination information, through the mobile unit managing server MDBSA2, together with the host name of the mobile radio unit ML001 and the original sender address "HostP" and the "PUSH" type of access (steps S211, S212).

Upon receiving the transmission data containing the host name of the mobile radio unit ML001 and the original sender address "HostP" and the "PUSH" type access from the information communications device HostP through the receiving section 211, the communication control section 212 of t he routing server RSA3 determines whether it is permitted to transmit PUSH data to the mobile radio unit ML001 according to the received host name of the mobile radio unit ML001 and the original sender address "HostP" and the "PUSH" type access (step S213). In this case, transmitting of PUSH data from the information communications device HostP is permitted in the security information for the mobile radio unit ML001, so that the routing server RSA3 transmits the transmission data together with the information on the original sender address "HostP" to the mobile radio unit ML001 (step S214).

Next, a case will be explained of transmitting the transmission data from the mobile radio unit ML001 after the security information has been set in the routing server RSA3 with reference to Figure 16. Setting of the security information is carried out in a manner similar to the process described above based on the security information, after the registration authentication process is completed, and the security information is established among the routing server RSA3, the mobile unit managing server MDBSA2, and the mobile unit managing server MDBSA1 (notations (1), (2), (3), (4)).

Next, a case will be considered of transmitting the transmission data from the mobile radio unit ML001 to the information communications device HostP in which the destination is set as "HostA", the original sender address is set as "ML001", and the access type is specified as "http". The communication control section 212 of the routing server RSA3 determines whether or not it is possible to send the transmission data. That is, the communication control section 212 determines whether or not communication is possible from the original sender address "ML001" to the destination "HostA" according to the access type "http" based on the security information stored in the security information storage section 213. In this case, the access managing information is "OK" so that the communication is permitted, so that the transmission data is transmitted fro m the mobile radio unit ML001 to the information communications device HostA (notation (5 -1)).

On the other hand, a case will be considered of transmitting the transmission data from the mobile radio unit ML001 to the information communications device Ho stA in which the destination is set as "HostA", original sender address is set as "ML001", and the access type is specified as "telnet". The communication control section 212 determines whether or not the transmission data is possible to be sent from the original sender address "ML001" to the destination "HostA" according to the access type "telnet" based on the security information stored in the security information storage section 213. In this example, the access managing information is "NG" (not good) so that the communication is not permitted, so that the transmission data is not transmitted from the mobile radio unit ML001 to the information communications device HostA, and is discarded (notation (5 -2)). Also, it is notified from the routing server RSA3 to the mobile radio unit ML001 that the communication is not permitted.

Also, a case will be considered of transmitting the transmission data from the mobile radio unit ML001 to the information communications device HostA in which the destination is set as "HostA", the original sender address is set as "ML001", and the access type is specified as "ftp". The communication control section 212 determines whether or not the transmission data of the access type "ftp" from the original sender address "ML001" to the destination "HostA" is possible, based on the security information stored in the security information storage section 213. In this example, the access managing information is "OK" so that the communication is permitted, so that the transmission data is transmitted from the mobile radio unit ML001 to the information communications device HostA (notation (5 -3)).

Next, a case will be considered of transmitting the transmission data from the mobile radio unit ML001 to the information communications device HostB in which the original sender address is set as "MLOO1", the destination is set as "HostB", and the access type is specified as "http". The communication control section 212 of the routing server RSA3 determines whether or not the transmission of data is possible. That is, the communication control section 212 determines whether or not the communication is possible from the original sender address "ML001" to the destination "HostB" according to the access type "http" based on the security information stored in the security information storage section 213. In this example, the access managing information is "NG" (not good) so that the communication is not permitted, so that the transmission data is not transmitted from the mobile radio unit ML001 to t he information communications device HostB, and is discarded (notation (6)). It is notified from the routing server RSA3 to the mobile radio unit ML001 that the communication is not permitted.

Next, a case will be considered of transmitting the transmission data from the mobile radio unit ML001 to the information communications device HostP and the information communications device HostQ in which the original sender address is set as "ML001", the destination is set as "HostP" and "HostQ" , and the access type is specified as "http". The communication control section 212 of the routing server RSA3 determines whether or not the transmission of data is possible. That is, the communication control section 212 determines whether or not the communication is possible from the original sender address "ML001" to the destination "HostP" and "HostQ" according to the access type "http", based on the security information stored in the security information storage section 213. In this example, the access managing information is "OK" so that the communication is permitted, so that the transmission data is transmitted from the mobile radio unit ML001 to the information communications device HostP and HostQ (notation (7)).

Here, in the mobile unit managing server explained above, when transmitting the security information to a routing server to set the security level, it may be arranged so that the access type is converted to port numbers to be transmitted to the routing server. By so doing, it is possible to combine it with other communication services.

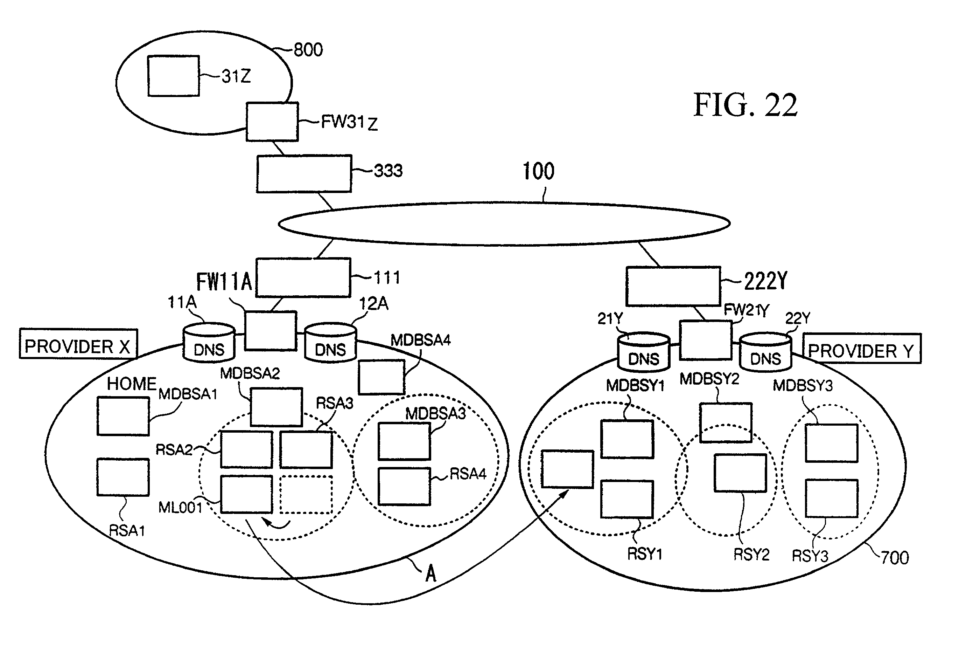

Next, another embodiment of the present invention in the second viewpoint will be explained with reference to the drawings. Figure 22 is a schematic diagram of the structure of the communications system. In this diagram, those parts that correspond to those in Figure 16 are given the same reference numbers, and their explanations are omitted.

In Figure 22, a network 700 is connected to the global network 100 through a VPN router 222Y and the firewall FW21Y. The network 700 is managed and operated by a provider Y and has a mobile unit managing server MDBSY1 that controls a routing server RSY1; a mobile unit managing server MDBSY2 that controls routing server RSY2; a mobile unit managing server MDBSY3 that controls routing server RSY3; and domain name servers (DNS) 21Y, 22Y

Also, a network 800 is connected to the global network 100 through a VPN router 333 and a firewall FW31Z. This network 800 is provided with the communications system managing server 31Z for managing the traveling mobile radio unit ML001 between the network A and the network 700. When the mobile radio unit travels to another area such that the routing server is changed, the communications system managing server 31Z stores a new Mobile-FQDN and IP address. This new FQDN contains information showing current association of the routing server.

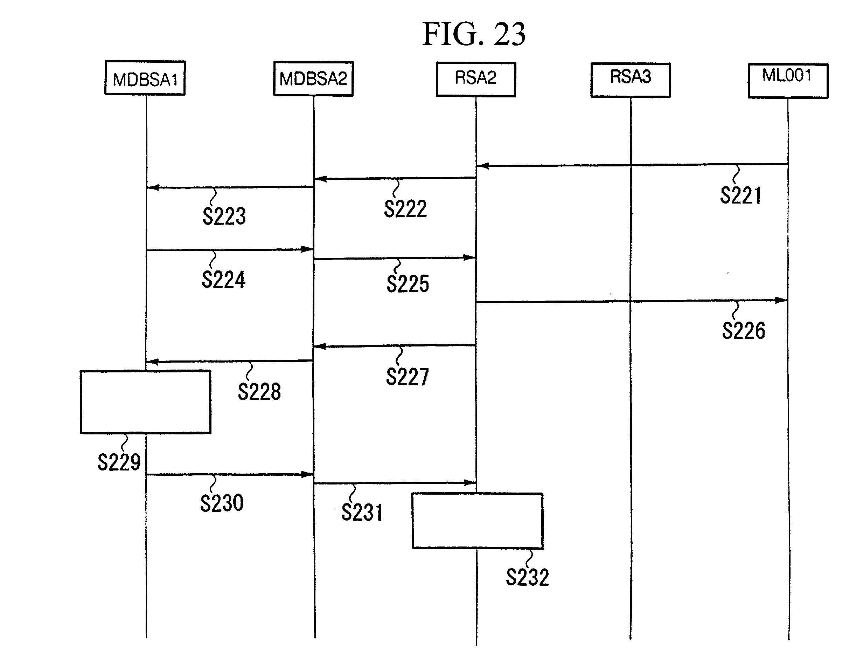

Next, the operation of the communications system shown in Figure 22 will be explained. In this case, the operation of setting the security information for the mobile radio unit ML001 that travels between the communications areas of routing servers will be explained with reference to the drawings. Figure 23 is a flowchart to explain the process of setting the security information when the mobile radio unit ML001 travels from a communications area controlled by the routing server RSA3 to a communication are a controlled by the routing server RSA2.

First, after relocating from a communications area of the radio base station controlled by the routing server RSA3 to a communications area of the radio base station controlled by the routing server RSA2, the mobile radio unit ML001 transmits the ID of the mobile radio unit ML001 and a registration request to the routing server RSA2 through the radio base station (step S221).

The routing server RSA2 temporarily holds the ID of the mobile radio unit ML001 and the registration request transmitted by the mobile radio unit ML001, and transmits the ID of the mobile radio unit ML001 and the registration request and the IP address of the routing server RSA2 to the mobile unit managing server MDBSA2 (step S222).

The mobile unit managing server MDBSA2 temporarily holds the ID of the mobile radio unit ML001 and the registration request and the IP address of the routing server RSA2 transmitted by the routing server RSA2, and determines whether or not the mobile radio unit is under its control according to the ID of the mobile radio unit ML001. In this case, the mobile unit managing server MDBSA2 is not managing the mobile radio unit ML001 so that, according to the information ca ched when the mobile radio unit ML001 traveled to the routing server RSA3, the mobile unit managing server MDBSA2 transmits the ID of the mobile radio unit ML001 and the registration request and the IP address of the routing server RSA2 to the mobile unit managing server MDBSA1 (step S223).

Upon receiving the ID of the mobile radio unit ML001 and the registration request and the IP address of the routing server RSA2 from the mobile unit managing server MDBSA2, the mobile unit managing server MDBSA1 stores a piece of information in a memory device that the mobile radio unit ML001 has traveled to an area under the control of the mobile unit managing server MDBSA2, and retrieves the home mobile unit managing server of the mobile radio unit ML001 according to the ID of the mobile radio unit ML001. In this case, it is determined that the mobile radio unit ML001 is under its control. Then, the mobile unit managing server MDBSA1 transmits the ID of the mobile radio unit ML001 and the authentication data to the mobile unit managing server MDBSA2 (step S224).

The mobile unit managing server MDBSA2 stores the ID of the mobile radio unit ML001 and the authentication data transmitted by the mobile unit managing server MDBSA1 in a memory device, and based on the temporarily-held IP address of the routing server RSA2, transmits the ID of the mobile radio unit ML001 and the authentication data transmitted by the mobile unit managing server MDBSA1 to the routing server RSA2 (step S225).

The routing server RSA2 correlates and stores the ID of the mobile radio unit ML001 and the authentication data transmitted by the mobile unit managing server MDBSA2, and transmits a registration permission (or refusal) to serve as information for accepting or refusing the registration of the mobile radio unit ML001 to the mobile radio unit ML001, through the radio base station according to the ID of the mobile radio unit ML001 (step S226). The mobile radio unit ML001 stores the registration permission transmitted by the routing server RSA2. Here, the process explained in steps S221-S226 corresponds to the registration authentication process in Figure 21.

Next, when the registration authentication process is completed, the routing server RSA2 transmits the ID of the mobile radio unit ML001 and a security information request to the mobile unit managing server MDBSA2. Subsequently, the steps S227, S228, S229, S230, S231, and S232 are carried out in a manner similar to the steps S202-S207 in Figure 21, and the security information of the mobile radio unit ML001 is entered in the routing server RSA2.

Accordingly, even when the mobile radio unit ML001 travels in different areas controlled by routing servers, the security information can be similarly set in each routing server.

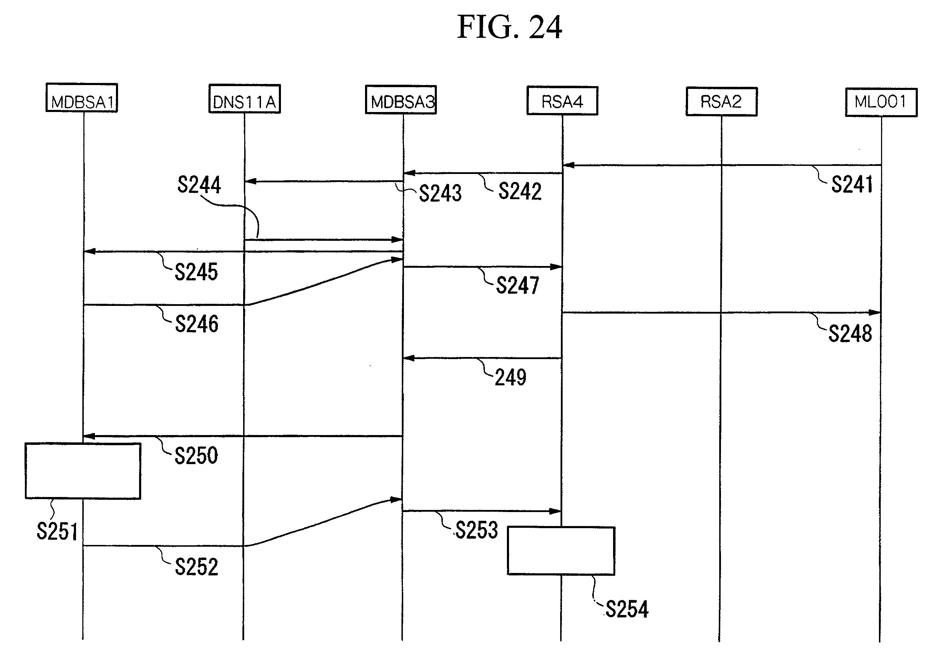

Next, still another embodiment of the present invention in the second viewpoint will be explained. In this example, the process of setting the security information when a mobile radio unit ML001 travels from a communications area controlled by a routing server RSA2 to a communications area controlled by a routing server RSA4 will be explained with reference to the flowchart in Figure 24.

First, when the mobile radio unit ML001 traveled from a communications area of the radio base station controlled by the routing server RSA2 to a communications area of the radio base station controlled by the routing server RSA4, the mobile radio unit ML001 transmits the ID of the mobile radio unit ML001 and a registration request to the routing server RSA4 which is the routing server at the destination (step S241). The routing server RSA4 temporarily holds the ID of the mobile radio unit ML001 and the registration request transmitted by the mobile radio unit ML001, and transmits the ID of the mobile ra dio unit ML001 and the registration request and the IP address of the routing server RSA4 to a mobile unit managing server MDBSA3 (step S242). The mobile unit managing server MDBSA3 temporarily holds the ID of the mobile radio unit ML001 and the registrati on request and the IP address of the routing server RSA4 transmitted by the routing server RSA4, and determines whether or not the routing server is under its control according to the ID of the mobile radio unit ML001.

In this case, the mobile unit managing server MDBSA3 is not controlling the mobile radio unit ML001, so that the ID of the mobile radio unit ML001 and a destination address resolution request and the IP address of mobile unit managing server MDBSA3 are transmitted to the domain name server DNS11A(step S243). The domain name server DNS11A determines whether or not the routing server is under its own control according to the ID of the mobile radio unit ML001.

In this case, the domain name server DNS11A is managing the mobile radio unit ML001, so that it is detected according to the ID of the mobile radio unit ML001 that the home mobile unit managing server of the mobile radio unit ML001 is the mobile unit managing server MDBSA1, and the IP of the mobile unit managing server MDBSA1 is transmitted to the mobile unit managing server MDBSA3 as the destination address resolution response (step S244). Upon receiving the destination address resolution response, the mobile unit managing server MDBSA3 transmits the ID of the mobile radio unit ML001 and an authentication request and the IP address of the mobile unit managing server MDBSA3 to the mobile unit managing server MDBSA1 (step S245). The mobile unit managing server MDBSA1 temporarily holds the ID of the mobile radio unit ML001 and the authentication request and the IP address of the mobile unit managing server MDBSA3 transmitted by the mobile unit managing server MDBSA3. Then, the mobile unit managing server MDBSA1 finds that the mobile radio unit ML001 is under its control according to the ID of the mobile radio unit ML001, and the authentication data to notify that the mobile radio unit ML001 has been authenticated and the ID of the mobile radio unit ML001 are transmitted to the mobile unit managing server MDBSA3 (step S246).

The mobile unit managing server MDBSA3 temporarily stores, and transmits the authentication data and the ID of the mobile radio unit ML001 transmitted by the mobile unit managing server MDBSA1, based on the temporarily-held IP address of the routing server RSA4 (step S247). The routing server RSA4 correlates and stores the ID of the mobile radio unit ML001 and the authentication data, and transmits a registration permission (or refusal) to serve as information for accepting or denying registration to the mobile radio unit ML001 according to the ID of the mobile radio unit ML001, through the radio base station (step S248).

Next, when the registration authentication process is completed, the routing server RSA4 transmits the ID of the mobile radio unit ML001 and the security information to the mobile unit managing server MDBSA3. Subsequently, the steps S249, S250, S251, S252, S253, and S254 are carried out in a manner similar to the steps S202-S207 in Figure 21, and the security information of the mobile radio unit ML001 is entered in the routing server RSA4.

Accordingly, even when the mobile radio unit ML001 travels in different areas of routing servers controlled by a different mobile unit managing server, the security information can be similarly set in the routing server at the travel destination.

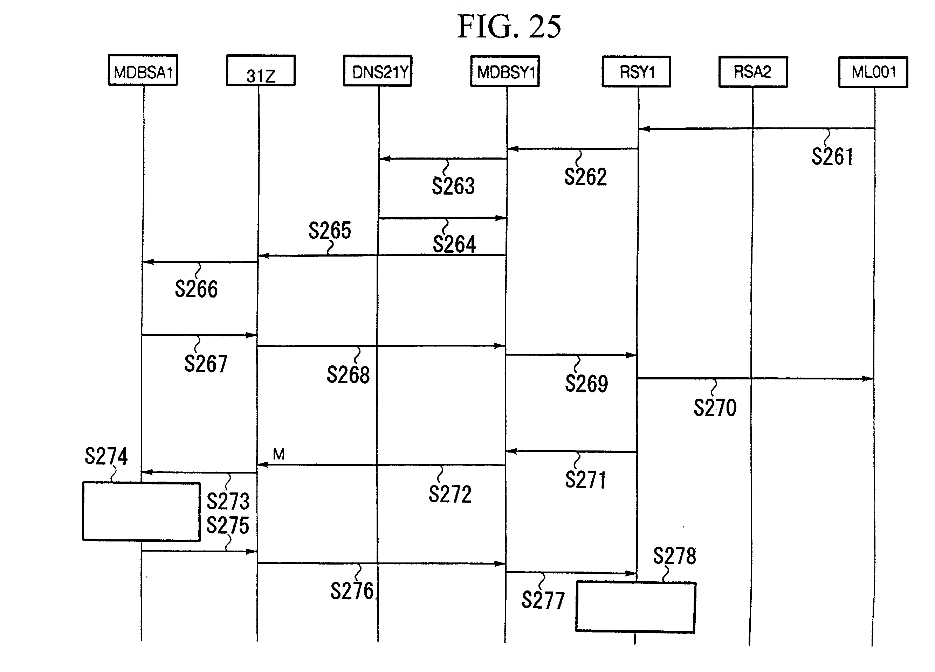

Next, still another embodiment of the present invention in the second viewpoint will be explained. In this embodiment, in the communications system shown in Figure 22, a case relates to a mobile radio unit ML001 traveling thro ugh different networks. In this case, an example relating to the mobile radio unit ML001 traveling from a communications area controlled by the routing server RSA2 to a communications area controlled by the routing server RSY1 will be explained using Figure 25. Figure 25 is a flowchart to explain the operation when the mobile radio unit ML001 travels through different networks.

First, after relocating in a communications area of a radio base station of routing server SY1, the mobile radio unit ML001 transmits the ID of ML001 and a registration request to the routing server RSY1 through the radio base station (step S261).

The routing server RSY1 temporarily holds the ID of the mobile radio unit ML001 and the registration request transmitted by the mobile radio unit ML001, and transmits the ID of the mobile radio unit ML001 and the registration request and the IP address of the routing server RSY1 to the mobile unit managing server MDBSY1 (step S262).

The mobile unit managing server MDBSY1 temporarily holds the ID of the mobile radio unit ML001 and the registration request and the IP address of the routing server RSY1 transmitted by the routing server RSY1, and determines whether or not the routing server is under its control according to the ID of the mobil e radio unit ML001. In this case, the mobile unit managing server MDBSY1 is not managing the mobile radio unit ML001 so that the mobile unit managing server MDBSY1 transmits the ID of the mobile radio unit ML001 and a destination address resolution request and the IP address of the mobile unit managing server MDBSY1 to the domain name server DNS21Y (step S263).

The domain name server DNS21Y determines whether or not the routing server is under its control according to the ID of the mobile radio unit ML001 transmitted by the mobile unit managing server MDBSY1. In this case, the mobile radio unit ML001 is not under its control so that a destination address resolution response to notify that the mobile radio unit ML001 is not under its control is transmitted to the mobile unit managing server MDBSY1 (step S264). Upon receiving the destination address resolution response from the domain name server DNS21, the mobile unit managing server MDBSY1 transmits the ID of the mobile radio unit ML001 and the authentication request and the IP address of the mobile unit managing server MDBSY1 to the communications system managing server 31Z, through the firewall FW21Y, the VPN router 222Y, the global network 100, the VPN router 333, and the firewall FW31Z (step S265).

Upon receiving the ID of the mobile radio unit ML001 and the registration request and the IP address of the mobile unit managing server MDBSY1, the communications system managing server 31Z stores that the mobile radio unit ML001 has traveled to an area under the control of the mobile unit managing server MDBSY1, and retrieves the home mobile unit managing server of the mobile radio unit ML001 according to the ID of the mobile radio unit ML001. In this case, it is detected that the home mobile unit managing server of the mobile radio unit ML001 is the mobile unit managing server MDBSA1. Then, the communications system managing server 31Z transmits the ID of the mobile radio unit ML001 and the registration request and the IP address of the communications system managing server 31Z to the mobile unit managing server MDBSA1, through the firewall FW31Z, the PVN router 333, the global network 100, the VPN router 111, and the firewall FW11A (step S266).

The mobile unit managing server MDBSA1 temporarily holds the ID of the mobile radio unit ML001 and the registration request and the IP address of the communications system managing server 31Z transmitted by the communications system managing server 31Z. Then, the mobile unit managing server MDBSA1 finds that the mobile radio unit ML001 is under its control according to the ID of the mobile radio unit ML001, and transmits the authentication data to indicate that the mobile radio unit ML001 has been authenticated and the ID of the mobile radio unit ML001 to the communica tions system managing server 31Z, through the firewall FW11A, the VPN router 111, the global network 100, the VPN router 333, and the firewall FW31Z (step S267).

The communications system managing server 31Z transmits the authentication data and the ID of the mobile radio unit ML001 transmitted by the mobile unit managing server MDBSA1 to the mobile unit managing server MDBSY1, based on the temporarily-held IP address of the mobile unit managing server MDBSY1, through the firewall FW31Z, the PVN router 333, the global network 100, the VPN router 222Y, and the firewall FW21Y (step S268).

The mobile unit managing server MDBSY1 correlates and stores the ID of the mobile radio unit ML001 and the authentication data transmitted by the communications system managing server 31Z, and transmits the ID of the mobile radio unit ML001 and the authentication data to the routing server RSY1, based on the temporarily-held IP address of the mobile unit managing server MDBSY1 (step S269). The routing server RSY1 correlates and stores the ID of the mobile radio unit ML001 and the authentication data transmitted by the mobile unit managing server MDBSY1, transmits a registration permission (or refusal) to serve as information for accepting or re fusing the registration according to the ID of the mobile radio unit ML001 (step S270). The mobile radio unit ML001 stores the registration permission transmitted by the routing server RSY1.

When the steps to S270 in the registration authentication process are completed, the routing server RSY1 transmits the ID and a security information request for the mobile radio unit ML001 to the mobile unit managing server MDBSY1 (step S271).

The mobile unit managing server MDBSY1 transmits the ID and the request for the security information of the mobile radio unit ML001 transmitted by the routing server RSY1 to the communications system managing server Z31 through the firewall FW21Y, the VPN router 222Y, the global network 100, the VPN router 333, and the firewall FW31Z (step S272). At this time, because the mobile unit managing server MDBSY1 had received the destination address resolution response in step S264 from the domain name server DNS21Y, the request for the security information are transmit ted to the communications system managing server 31Z (step S272).

The communications system managing server 31Z transmits the received ID and the request for the security information of the mobile radio unit ML001 to the mobile unit managing server MDBSA1 according to the ID of the mobile radio unit ML001, through the firewall FW31Z, the PVN router 333, the global network 100, the VPN router 111, and firewall FW11A (step S273).

Upon receiving the ID of the mobile radio unit ML001 and the request for the security information of the mobile radio unit ML001 from the communications system managing server 31Z, the mobile unit managing server MDBSA1 accesses the security information according to the ID of the mobile radio unit ML001 (step S274). Then, the obtained security information for the mobile radio unit ML001 and the ID of the mobile radio unit ML001 are transmitted to the communications system managing server 31Z, through the firewall FW11A, the VPN router 111, the global network 100, the VPN router 333, and the firewall FW31Z (step S275).

The communications system managing server 31Z transmits the security information of the mobile radio unit ML001 and the ID of the mobile radio unit ML001 transmitted by the mobile unit managing server MDBSA1 to the mobile unit managing server MDBSY1, through the firewall FW31Z, the VPN router 333, the global network 100, the VPN router 222Y, and the firewall FW21Y (step S276).

The mobile unit managing server MDBSY1 transmits the security information and the ID of the mobile radio unit ML001 transmitted by the c ommunications system managing server 31Z to the routing server RSY1 (step S277). The routing server RSY1 correlates and stores the ID and the security information of the mobile radio unit ML001 transmitted by the mobile unit managing server MDBSY1 (step S278).

By carrying out the process described above, the mobile radio unit ML001 located in a communications area served by the radio base station controlled by the routing server RSY1 is able to communicate at the same security level as when it was under the control of the mobile unit managing server MDBSA1. That is, even when traveling through different networks, the same security level provided by the home routing server can be set in a communications area under the control of a routing server at the destination.

Here, in the embodiments described above, the authentication data and the security information were transmitted separately, but it is permissible to attach the security information to the authentication data so as to carry out registration authen tication operation and the security information setting operations at the same time.

Also, in the embodiments explained above, the IDs for identifying mobile radio units and host names are stored in the security storage section 223 of a mobile unit managing server (for example, the mobile unit managing server MDBSA1), but in addition to the IDs and host names, the IP address and the FQDN and the Mobile-FQDN may also be stored. That is, any type of information, not limited to the ID and the host names, is acceptable so long the information is able to establish the identity of a mobile radio unit.

For example, in step S210 in Figure 21, when transmitting the transmission data, the information communications device HostP specifies the destination by a host name of a mobile radio unit ML001, but the host name may be replaced with an IP address to specify the mobile radio unit ML001. In this case, in the security storage section 13 of the routing server RSA3, the IP addresses are stored in addition to host names. Then, the transmission data are transmitted using the IP address.

In the embodiments explained above, the network A and the network 700 use the same communications system in Figure 22, but when the system is used by two different firms, and when the mobile radio unit ML001 travels to the network 700, security problems are created between the mobile radio unit ML001 and the network 700 used by a different firm. However, by using the communications system described above, communication is possible while ensuring security even among different firms. In this case, the security information to restrict access can be provided to a traveling mobile radio unit ML001.

By so doing, if it is required for a firm that mobile radio units roam and move into a communications area that cannot be covered by itself, communication may be provided using a network belonging to the other firm while maintaining the required security level, that is, by restricting the access.

By so doing, a plurality of firms can participate in reducing the cost of constructing a network and cumbersome managing.

Also, the capabilities of the communication control section 212, the security information storage section 213 shown in Figure 17, and the security information transmitting control section 222 and the security information storage section 223 may be performed by recording application programs for performing the processes, and loading the programs in a computer system for execution. A computer system, in this context, includes any operating systems (OS) and peripheral hard wares.

A computer system may also include the use of world wide webs and home page portals (or display environment).

Computer readable recording media include portable media such as floppy disks, opto-magnetic disks, ROMs, CD-ROMs, as well as fixed devices such as hard disks housed in computer systems. The computer readable recording media further include short -term dynamic memories (transmission media inclusive of wave signals) used in transmitting applications through such means as networks such as the Internet or telephone circuits, as well as other short-term memories such as volatile memories used in servers and client computer systems. The application programs may perform a part of the described capabilities, or may be operated in conjunction with pre-recorded programs stored in computer systems.

The embodiments in the present invention have been described above in detail with reference to the drawings, but the specific structures are not limited to those disclosed in the embodiments, and include any designs within the scope of the present invention.

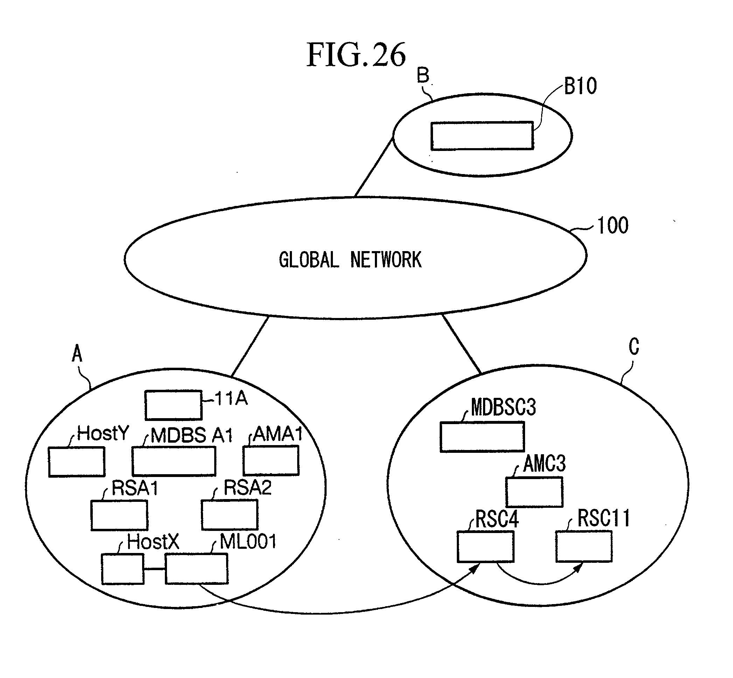

In the following, an embodiment of the present invention in the third viewpoint will be explained with reference to the drawings. Figure 26 is schematic block diagram of the structure of the communications system based on the area managing server provided in this embodiment. In this diagram, a network A and a network C are connected to the global network 100.

The mobile unit managing server MDBSA1 manages the identifiers (IDs) and the IP addresses of the routing servers RSA1-RSA2 and the radio base stations (not shown) under its control, and manages also the ID, the Mobile-FQDN, the FQDN, and the security information of the mobile radio unit ML001. A mobile unit managing server MDBSC3 manages the respective IDs and IP addresses of a routing server RSC4, a routing server RSC11, radio base stations, mobile radio units and terminals.

RSA1, RSA2, RSC4 and RSC11 are routing servers, and each is in contact with at least one radio base station to provide routing of IP packets. In this embodiment, the routing servers RSA1 and RSA2 are managed by the mobile unit managing server MDBSA1, and the routing servers RSC4, RSC11 are managed by the mobile unit managing server MDBSC3. The domain name servers 11A and 12A convert the domain name to the IP address.

The mobile radio unit ML001 is connected to the information terminal HostX such as computer or PDA and is connected to the routing server RSA1 through the radio base station. Also, this mobile radio unit ML001 is provided with a preset identifier (the ID). In this example, it is assumed that the home mobile unit managing server for the mobile radio unit ML001 is the mobile unit managing server MDBSA1.

Area managing server AMA1 is connected between the mobile unit managing server MDBSA1 and the routing servers RSA1 and RSA2. The area managing serverAMC3 is connected between the mobile unit managing server MDBSC3 and the routing servers RSC4 and RSC11.

The network B is provided with a communications system managing server B10 for managing the travel of the mobile radio unit ML001 that travels through the network A to the network C. The communications system managing server B10 stores a new Mobile-FQDN and IP address of a routing server when it travels into a communications area controlled by a routing server that is different from the routing server managed by the home mobile unit managing server. This new Mobile-FQDN contains information set in the mobile radio unit to indicate its current association.

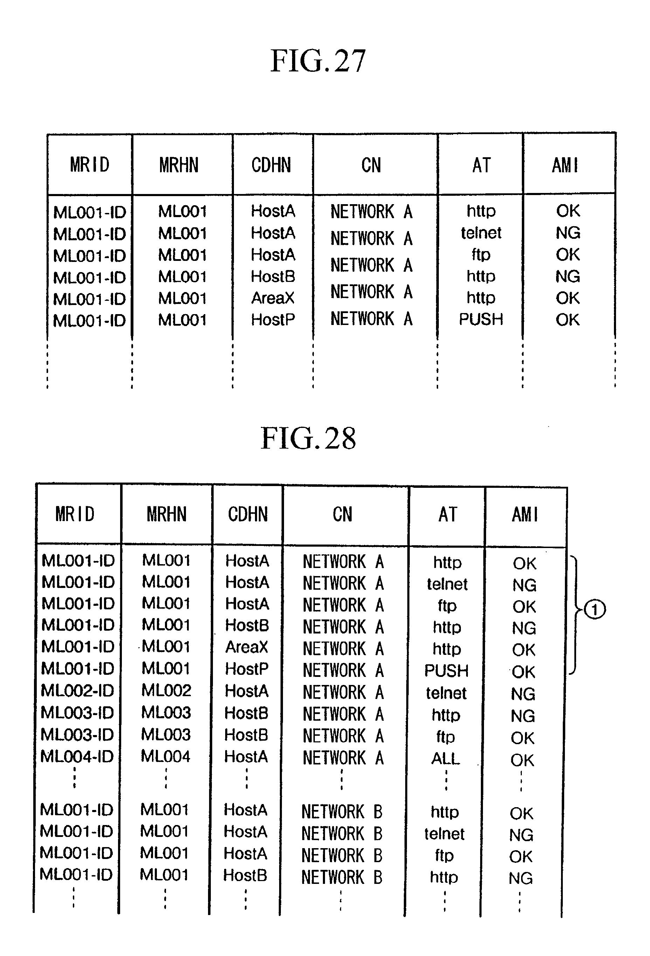

The structure of the routing server RSA1 is the same as that of the routing server shown in Figure 17, and the explanation is here omitted. The routing server RSA1 is provided with a security information storage section 213 as shown in Figure 17. An example of the security information stored in the security information storage section 213 is shown in Figure 27. As shown in this diagram, the security information contains correlated information, as in Figure 18, on the ID and the host name of the mobile radio unit for identification (MRID and MRHN in Figure 27), the host name of the communications device to identify the destination communications device (CDHN), an access type information to specify protocols, communication services and communication capabilities for connecting to the destination communications device (AT), an access managing information for specifying the type of communication capability, and the access managing information for permitting or denying access between the destination device and the mobile radio unit (AMI). In this embodiment, the security information is associated with further information on the network currently connected by the mobile radio unit which contains the name of the network with which the mobile radio unit is currently affiliated (CN in Figure 27). Setting of access types such as "http", "telnet", "ftp", "ALL", "PUSH", and setting of access managing information such as "OK" and "NG" in Figure 27 are the same as those shown in Figure 18 so that their explanations are omitted.

Here, in Figure 27, only one mobile radio unit having a host name "ML001" is shown, but the security information for another mobile radio units that are controlled by the same routing server are included therein.

Also, the structures of other the routing servers RSA2, RSC4, and RSC11 are the same as the structure of routing server RSA1.

The structure of the mobile unit managing server MDBSA1 is the same as that explained in Figure 19, and specific explanations are omitted.

The security storage section 223 stores the security information for permitting or denying communication with a destination communications device for each mobile radio unit that has the mobile unit managing server MDBSA1 as its home mobile unit managing server.

An example of the security information stored in the security information storage section 223 is shown in Figure 28. The security information shown in Figure 28 includes those similar to ones shown in Figure 20, the ID and the host name of the mobile radio unit (MRID and MRHN in Figure 28), the host name of the communications devices (CDHN), the access types (AT), and the access managing information (AMI). The security information in this embodiment is associated with further information on the network currently connected by the mobile radio unit which contains the name of the network with which the mobile radio unit is currently affiliated (CN in Figure 28).

Here, by setting access restrictions for each affiliated network for mobile radio units, access restriction can be altered depending on the current association of a mobile radio unit. Setting of the network name for the currently affiliated network of a mobile radio unit is carried out by management of the mobile radio unit at the time of init ial registration of the mobile radio unit, and when a change occurs in the security information, the contents of the setting of the mobile unit managing server for the mobile radio unit are changed. Accordingly, by setting access restrictions for each currently affiliated network for the mobile radio units, use of the Extranet becomes possible as in the network based on extension of the Intranet. For example, in an Intranet, various information is accessible at the level of the head office and branch stores, but an environment may be created such that at the level of subsidiary and related company, access is permitted at restricted levels even when connected to an external network. This type of system operation is applicable to currently affiliated network name stored in the security information storage section 213 described above as well as in the security information storage section 333 which will be described later.

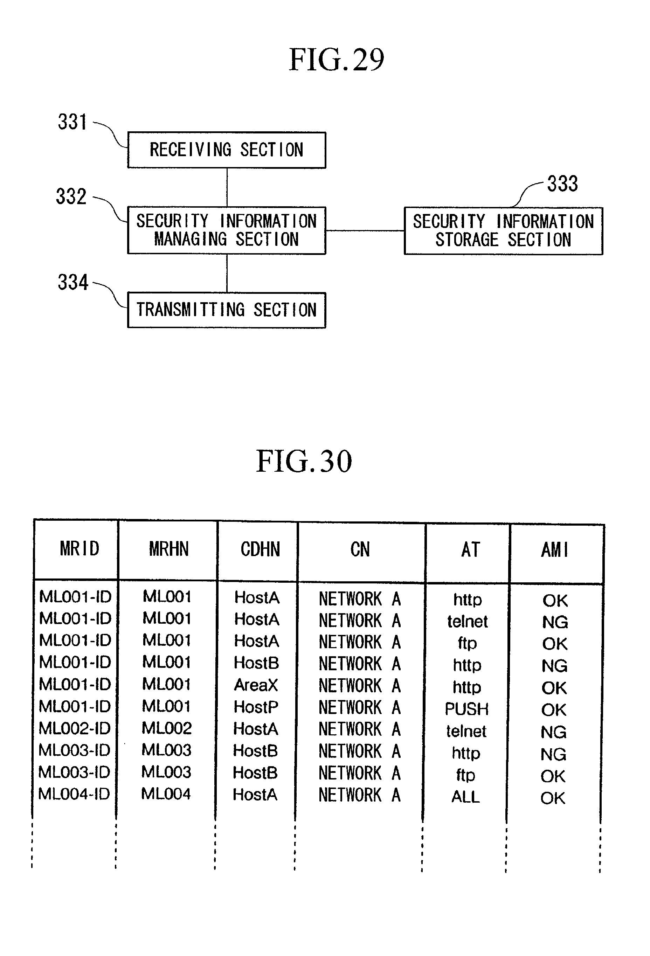

Next, the area managing server AMC3 in Figure 26 will be explained with reference to the drawings. Figure 29 is a schematic block diagram of the structure of the area managing server AMC3. In this diagram, a receiving section 331 receives the security information transmitted from mobile unit managing server to a routing server.

A security information managing section 332 receives the security information transmitted from the home mobile unit managing server to a routing server of a terminal locating at a travel destination through the receiving section 331, and stores the received security information in the security information storage section 333, and when the terminal travels from an area of the routing server at the travel destination to an area of a routing server not managed by the home mobile unit managing server, it reads the security information stored in the security information storage section 333, and the obtained security information is transmitted by the transmitting section 334 to the routing server at the travel destination.

The transmitting section 334 transmits the security information to the destination routing server according to instructions from the security information managing section 332.

The security information storage section 333 stores the security information according to instructions from the security information managing section 332. An example of the security information stored in the security information storage section 333 is shown in Figure 30. The security information stored in the security information storage section 333, similar to the security information stored in the mobile unit managing server as shown in Figure 28, correlates and stores the IDs of the mobile radio units (MRID), the host name of the mobile radio units (MRHN), the name of currently affiliated network by the mobile radio unit (CN), the hostname of the communications devices (CDHN), the access types (AT), and the access managing information (AMI).

Here, the structure of the area managing server AMA1 shown in Figure 26 is the same as that of the area managing server AMC3, so the explanation is omitted.

Next, the operation of the area managing server AMC3 having the structure shown in Figure 26 will be explained with reference to the drawings. This example relates to the operation of the area managing server AMC3 after the mobile radio unit ML001 once communicated, while having been affiliated with the routing server RSA1 of the network A, and the mobile radio unit ML001 travels to a region controlled by a routing server RS C4 of network C, and then travels further to a region controlled by a routing server RSC11. Also, in this case, the IP address is presumed to be a global IP address.

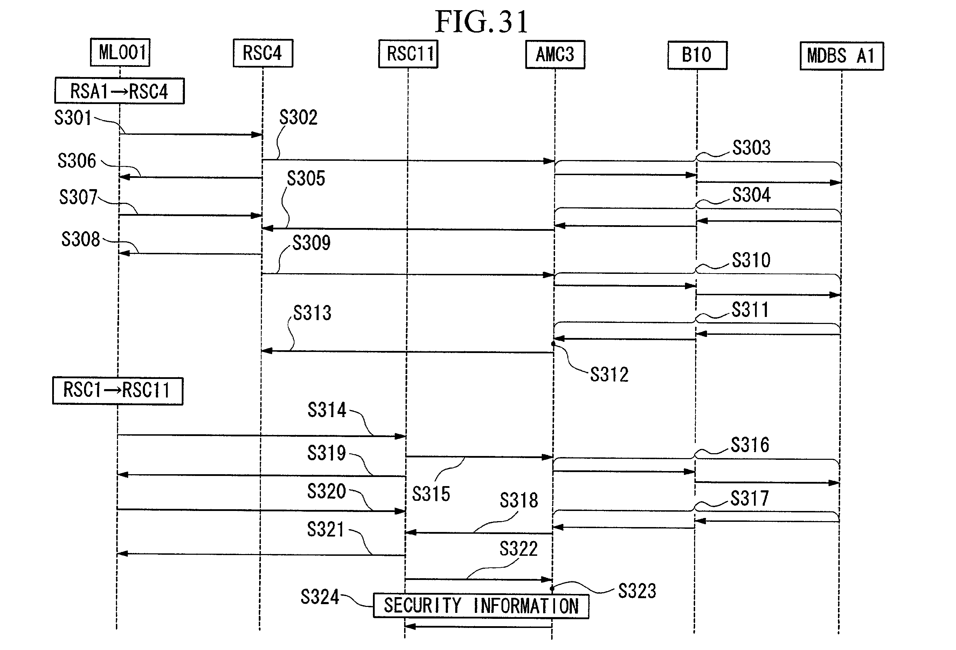

Figure 31 is a diagram of the operational sequence of the radio communications system.

First, the mobile radio unit ML001 that had been communicating under the control of the routing server RSA1 of the network A travels to a region controlled by the routing server RSC4 in the network C, then the mobile radio unit ML001 notifies the routing server RSC4 within a communicable range by transmitting its ID and a registration request (step S301). Upon receiving the ID of the mobile radio unit ML001 and the registration request of the mobile radio unit ML001 from the mobile radio unit ML001, the routing server RSC4 generates a random number, and transmits the random number and the ID of the mobile radio unit ML001 and the authentication request to the area managing server AMC3 (step S302). The area managing server AMC3 transmits the received random number and the ID of the mobile radio unit ML001 and the registration request to the mobile unit managing server MDBSA1 through the communications system managing server B10 (step S303).

The mobile unit managing server MDBSA1 carries out the authentication process using the received ID of the mobile radio unit ML001, and when the authentication process is completed correctly, computes a random number based on the received random number and using a specific computation rule, then the computed random number and the ID of the mobile radio unit ML001 and the authentication data to show the completion of authentication are transmitted to the area managing server AMC3 through the communications system managing server B10 (step S304).

The area managing server AMC3 transmits the result of random number computation and the ID of t he mobile radio unit ML001 and the authentication data transmitted by the mobile unit managing server MDBSA1 further to the routing server RSC4 (step S305).

The routing server RSC4, after transmitting the authentication data and others to the area managing server AMC3 in step S302, transmits a duplicate of the random number obtained in step S302 to the mobile radio unit ML001 (step S306). In the mobile radio unit ML001, a computation using the same rule as that used by the mobile unit managing server MDBSA1 is carried out based on the duplicate random number. The routing server RSC4 receives the computed random number computed in the mobile radio unit ML001 (step S307). Then, the routing server RSC4 compares the random number transmitted from the area managing server AMC3 with the computed random number transmitted from the mobile radio unit ML001, and when the numbers are identical, registration for the mobile radio unit ML001 is accepted, and a registration permission notice is transmitted to the mobile radio unit ML001 (step S308).

By following such process, the mobile radio unit ML001 is able to communicate inside a communications area controlled by the routing server RSC4. The authentication process enables the routing server RSC4 to store that the mobile radio unit ML001 is under its control and enables the mobile unit managing server MDBSA1 to store that the mobile radio unit ML001 is under the control of the routing server RSC4.

Further, the routing server RSC4 transmits the ID of the mobile radio unit ML001 that has completed registration and a security information transmission request is forwarded to the area managing server AMC3 (step S309).

The area managing server AMC3 transmits the ID of the mobile radio unit ML001 and the security information transmission request to the mobile unit managing server MDBSA1 through the communications system managing server B10 (step S310).

Upon receiving the ID of the mobile radio unit ML001 and the security information transmission request from the area managing server AMC3, the mobile unit managing server MDBSA1 reads the security information corresponding to the ID of the mobile radio unit ML001 from the security information storage section 223, and this security information, together with the ID of the mobil e radio unit ML001, is transmitted to the area managing server AMC3 through the communications system managing server B10 (step S311).

The area managing server AMC3 stores the ID of the mobile radio unit ML001 and the security information transmitted fro m the mobile unit managing server MDBSA1 in the security information storage section 333 using the security information managing section 332 (step S312), and transmits the packet to the routing server RSC4 (step S 313).

The routing server RSC4 stores the ID of the mobile radio unit ML001 and the security information transmitted from the area managing server AMC3 in the security information storage section 213. Accordingly, the routing server RSC4 is able to set the security information for the mobile radio unit ML001 by obtaining and storing the security information from the mobile unit managing server MDBSA1 which is the home mobile unit managing server of the mobile radio unit ML001. Then, when the mobile radio unit ML001 attempts to carry out communicati on with another terminal, the routing server RSC4 controls whether or not to establish connection according to this security information. Accordingly, communication can be established if the access managing information is "OK", and communication cannot be established if the access managing information is "NG" (not good).

Next, when the mobile radio unit ML001 travels from a communications area controlled by the routing server RSC4 to a communications area controlled by the routing server RSC11, the mobile radio unit ML001 transmits the ID of the mobile radio unit ML001 and a registration request to the routing server RSC11 (step S 314). Subsequently, similar to the steps S302-S308 described above, authentication process is carried out between the mobile unit managing server MDBSA1 and the routing server RSC11, and between the routing server RSC11 and the mobile radio unit ML001 (steps S315, S316, S317, S318, S319, S320, and S321).

When the authentication process is completed, the routing server RSC11 transmits the ID of the mobile radio unit ML001 and the security information request to the area managing server AMC3 (step S322). Upon receiving the ID of the mobile radio unit ML001 and the security information request from the routing server RSC11, the security information managing section 332 of the area managing server AMC3 reads the security information of the mobile radio unit ML001 from the security information storage section 333 according to the received ID of the mobile radio unit ML001 (step S 323), and the obtained security information is transmitted to the routing server RSC11 (step S 324).

Accordingly, by storing the security information in the area managing server AMC3, it is possible to transmit the security information to a routing server at the travel destination, without having the security information transmitted from the mobile unit managing server MDBSA1 for every travel of the mobile radio unit ML001. Therefore, transmitting of the security information can be completed within the network C so that the load on the global network 100 and the network A can be reduced. Also, it enables suppression of information leakage by reducing the flow of the security information into the global network 100, and further, to reduce the time required for data reception.

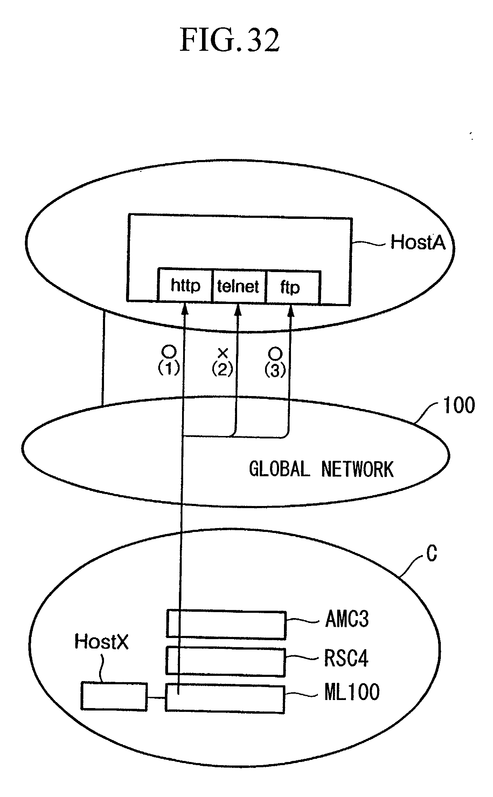

Next, the process of determining whether or not to establish communication based on the security information will be explained with reference to Figure 32.

For example, when the transmission data addressed to communications device HostAis transmitted by the mobile radio unit ML001 specifying "HostA" as the destination, "ML001" as the original sender, "http" as the access type, the communication control section 212 of the routing server RSC11 determines whether or not the transmission data can be transmitted. That is, the communication control section 212 determines whether transmitting of data of access type "http" is possible from the mobile radio unit ML001 to communications device HostA based on the security information stored in the security information storage section 213. In this case, the access managing information is "OK" so that communication is permitted and the transmission data is transmitted from the mobile radio unit ML001 to the communications device HostA (notation (1)).

On the other hand, when the transmission data addressed to the communications device HostA is transmitted by the mobile radio unit ML001 specifying "HostA" as the destination, "ML001" as the original sender, "telnet" as the access type, communication control section 212 of the routing server RSC11 determines whether or not the transmission data can be transmitted. That is, communication control section 212 determines whether or not transmitting data of the access type "telnet" is possible from the mobile radio unit ML001 to the communications device HostA based on the security information stored in the security information storage section 213. In this case, the access managing information is "NG" (not good) so that communication is not permitted and the transmission data is not transmitted from the mobile radio unit ML001 to the communications device HostA, and the packets are discarded. (notation (2)). Also, notification is transmitted from the routing server RSA3 to the mobile radio unit ML001 that communication has been denied.

Also, when the transmission data addressed to the communications device HostA is transmitted by the mobile radio unit ML001 specifying "HostA" as the destination, "ML001" as the original sender, "ftp" as the access type, the communication control section 212 determines whether or not transmitting the data of the access type "ftp" is possible from the mobile radio unit ML001 to the communications device HostA based on the security information stored in the security information storage section 213. In this case, the access managing information is "OK" so that communication is permitted and the transmission data is transmitted from the mobile radio unit ML001 to the communications device HostA (notation (3)).

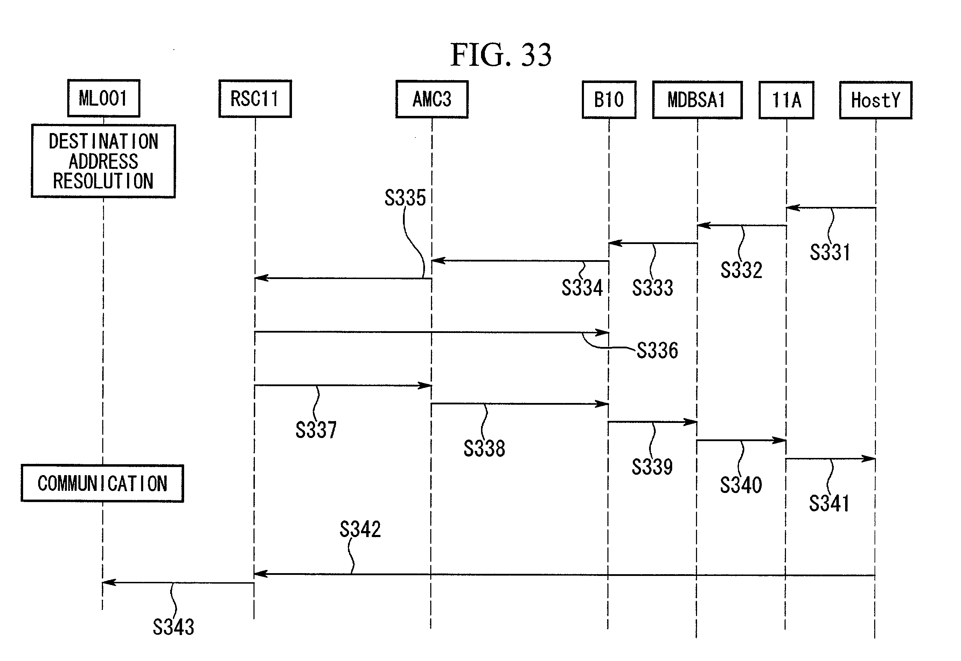

Next, in Figure 26, a case of transmitting the transmission data from the communications device HostY to the mobile radio unit ML001 under the control of the routing server RSC11 will be explained with reference to Figure 33. Figure 33 is a flowchart of the process of transmitting th e transmission data from the communications device HostY to the mobile radio unit ML001 under the control of the routing server RSC11. In this case, it is presupposed that the mobile radio unit ML001 has already traveled in a communications area under the control of the routing server RSC11, and that the authentication process to the routing server RSC11 has been completed.

First, the communications device HostY transmits a FQDN of the mobile radio unit ML001 (for example, m1001.mdbsa1.providera) which is the target of the destination address resolution and a destination address resolution request and the IP address of the communications device HostY to the domain name server 11A (step S331).

Upon receiving the FQDN of the mobile radio unit ML001 and the destination address resolution request and the IP address of the communications device HostY, the domain name server 11A temporarily holds the received FQDN of the mobile radio unit ML001 and the destination address resolution request and the IP address of the communications device HostY, determines whether or not the mobile radio unit ML001 is under its control according to the FQDN of the mobile radio unit ML001, in this case, because the mobile radio unit ML001 is not under its control, the domain name server 11A transmits the temporarily-held FQDN of the mobile radio unit ML001 and the destination address resolution request and the IP address of the communications device HostY to the mobile unit managing server MDBSA1 (step S332).

Upon receiving the FQDN of the mobile radio unit ML001 and the destination address resolution request and the IP address of the communications device HostY from the domain name server 11A, the mobile unit managing server MDBSA1 temporarily holds the received FQDN of the mobile radio unit ML001 and the destination address resolution request and the IP address of the communications device HostY, and determines whether or not the mobile radio unit ML001 is under its control according to the FQDN of the mobile radio unit ML001, in this case, because the mobile radio unit ML001 is not under its control, the mobile unit managing server MDBSA1 transmits the temporarily-held FQDN of the mobile radio unit ML001 and the destination address resolution request and the IP address of the communications device HostY to the communications system managing server B10 (step S333).

The communications system managing server B10 temporarily holds the FQDN of the mobile radio unit ML001 and the destination address resolution request and the IP address of the communications device HostY transmitted by the mobile unit managing server MDBSA1, and then finds that the routing server of the mobile radio unit ML001 after relocation is the routing server RSC11, as well as the Mobile-FQDN (for example, m1001.mdbsa1.providera.rsc11.providerc) to indicate its current association according to the FQDN of the mobile radio unit ML001.

Then, the communications system managing server B10 transmits the detected Mobile-FQDN of the mobile radio unit ML001 (for example, m1001.mdbsa1.providera.rsc11.providerc) and the destination address resolution request, to the area managing server AMC3 connected to the routing server RSC11 (step S334).

Upon receiving the Mobile-FQDN and the destination address resolution request from the communications system managing server B10, because the mobile radio unit ML001 is under the control of the routing server RSC11, the area managing server AMC3 transmits the destination address resolution request as the traveling node information request together with the Mobile-FQDN of the mobile radio unit ML001 to the routing server RSC11 (step S335).

Upon receiving the Mobile-FQDN of the mobile radio unit ML001 and the traveling node information request from the area managing server AMC3, because the mobile radio unit ML001 is under its control, the routing server RSC11 transmits the Mobile -FQDN and the IP address of the mobile radio unit ML001 and the address registration request to the communications system managing server B10.

The communications system managing server B10 correlates and stores the Mobile-FQDN and the IP address of the mobile radio unit ML001 (step S336).

On the other hand, the routing server RSC11 further transmits a traveling node information response to the area managing server AMC3 to inform that the traveling node information request has been received and that the address registration request has been transmitted to the communications system managing server B10 (step S337).

Upon receiving the traveling node information response and the Mobile-FQDN of the mobile radio unit ML001 from the routing server RSC11, the area managing server AMC3 transmits a destination address resolution response and the Mobile-FQDN of the mobile radio unit ML001 to the communications system managing server B10 (step S338).

Upon receiving the destination address resolution response and the Mobile-FQDN of the mobile radio unit ML001 from the area managing server AMC3, the communications system managing server B10 determines whether or not there is an IP address registered to correspond to the Mobile-FQDN of the mobile radio unit ML001. In this case, the IP address of the mobile radio unit ML001 is retrieved. Then, the communications system managing server B10 transmits the IP address of the mobile radio unit ML001 as the destination address resolution response to the mobile unit managing server MDBSA1 (step S339).

The mobile unit managing server MDBSA1 transmits the IP address of the mobile radio unit ML001 transmitted by the communications system managing server B10 to the domain name server 11A as the destination address resolution response (step S340).

Upon receiving the IP address of the mobile radio unit ML001 from the mobile unit managing server MDBSA1 as the destination address resolution response, the domain name server 11A transmits the received the IP address of the mobile radio unit ML001 to the communications device HostY as the destination address resolution response (step S341).

By following the process described above, the IP address of the mobile radio unit ML001 at the travel destination is notified to the communications device HostY. Accordingly, the communications device HostY is able to transmit the transmission data and others to the mobile radio unit ML001 as necessary (steps S342, S343).

In another embodiment instead of the embodiment described above, when the network A and the network C shown in Figure 26 are used by different firms while sharing the same radio communications system, and when the mobile radio unit ML001 travels from the network A to the network C, a security problem is created between the mobile radio unit ML001 and the network C are used by a different firm. However, secure communication is enabled by using the radio communications system described above. In this case, it is possible to preset certain security information that restricts access to a mobile radio unit ML001 traveling on the network.

By so doing, if it is required for a firm that mobile radio units roam and move into a communications area that cannot be covered by itself, communication may be provided using a network belonging to the other firm while maintaining the required security level, that is, by restricting the access.

By so doing, a plurality of firms can participate in reduc ing the cost of constructing a network and cumbersome managing.

In the embodiments explained above, the IP address is a global IP address, but within an network, it is permissible to use a local IP address. In this case, a firewall or a routing server may be provided with NAT capability.

Also, in the embodiments explained above, the area managing server AMC3 and the mobile unit managing server are separate entities, but it is permissible to provide the mobile unit managing server with area managing server capability.

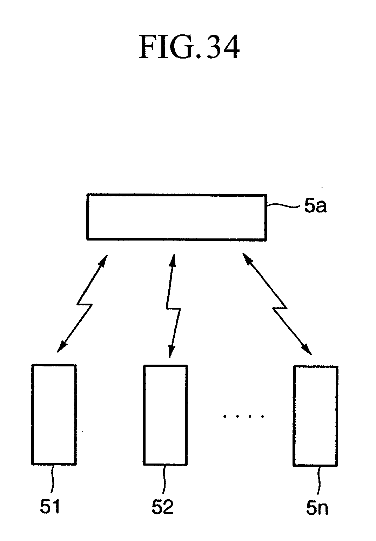

Also, in the embodiments explained above, communication is carried out between a communications device connected to a global network and a mobile radio unit connected to a terminal, however, as shown in Figure 34, the mobile radio unit may be replaced by a mobile radio router 5a, that allows a plurality of terminals 51 -5n to be connected, to communicate with the communications device provided on the global network side. In such a case, mobile radio router 5a stores information necessary to establish communication between the terminals and other communications device such as the IP addresses of terminals 51-5n affiliated to itself the FQDNs, the IDs, and the number of registered terminals connected to itself so as to enable authentication of terminals by the mobile radio router 5a.

Further, in Figure 34, mobile radio router 5a and one or more of the terminals 51-5n may be encased in a common casing. Also, communication between the mobile radio router and the terminals may be carried out by radio signals, or through wired connections.

Also, the capabilities of the security information managing section 332 as shown in Figure 29, the communication control section 212 as shown in Figure 17, and the security information transmitting control section 222 in Figure 19 may be performed by recording application programs for performing the processes, and loading the programs in a computer system for execution. A computer system, in this context, includes any operating systems (OS) and peripheral hardwares.

A computer system may also include the use of world wide webs and home page portals (or display environment).

Computer readable recording media include portable media such as floppy disks, opto-magnetic disks, ROMs, CD-ROMs, as well as fixed devices such as hard disks housed in computer systems. The computer readable recording media further include short-term dynamic memories (transmission media inclusive of wave signals) used in transmitting applications through such means as networks such as the Internet or telephone circuits, as well as other short-term memories such as volatile memories used in servers and client computer systems. The application programs may perform a part of the described capabilities, or may be operated in conjunction with pre-recorded programs stored in computer systems.

The embodiments in the present invention have been described above in detail with reference to the drawings, but the specific structures are not limited to those disclosed in the embodiments, and include any designs within the scope of the present invention.

## Claims

1. A radio communications system for a plurality of networks connected to a global network comprised of essential components, for each network, including at least one routing server and a radio base station connected to the routing server to communicate using radio signals with a mobile radio unit connected to a terminal, wherein
a communications system managing server is provided for managing addresses of the mobile radio unit traveling between the networks.

2. A radio communications system according to claim 1, wherein the communications system managing server further performs a security managing operation to determine whether or not to permit communication of the mobile radio unit traveli ng between the networks with other communications devices.

3. A radio communications system according to claim 1, wherein when one mobile radio unit or a host connected to one of the networks attempts to communicate with another mobile radio unit connected to another network, in response to a destination address resolution request transmitted from the one mobile radio unit or the host, an Internet Protocol address allocated to the other mobile radio unit by a routing server currently connected to the other mobile radio unit is notified to the one mobile radio unit or the host.

4. A communications system managing server which is provided in a radio communications system for a plurality of networks connected to a global network comprised of essential components, for each network, including at least one routing server and a radio base station connected to the routing server to communicate using radio signals with a mobile radio unit connected to a terminal, and is so connected to the global network wherein
when one mobile radio unit or a host connected to one of the networks attempts to communicate with another mobile radio unit connected to another network, and if a destination address resolution is required, in response to a destination address resolution request transmitted from the one mobile radio unit or the host, an Internet Protocol address allocated to the other mobile radio unit by a routing server currently connected to the other mobile radio unit is notified to the one mobile radio unit or the host by the communications system managing server.

5. A communications system managing server which is provided in a radio communications system for a plurality of networks connected to a global network comprised of essential components, for each network, inclu ding at least one routing server and a radio base station connected to the routing server to communicate using radio signals with a mobile radio unit connected to a terminal, and is so connected to the global network wherein
when one mobile radio unit or a host connected to one of the networks attempts to communicate with another mobile radio unit connected to another network and is controlled by a routing server that is not controlled by a home mobile unit managing server, and if a destination address resolution is required, an Internet Protocol address allocated to the other mobile radio unit by the routing server that is not controlled by the home mobile unit managing server is notified to the one mobile radio unit or the host by the communications system managing server.

6. A method for managing a mobile radio unit traveling between networks in a radio communications system for a plurality of networks connected to a global network comprised of essential components, for each network, including at least one routing server and a radio base station connected to the routing server to communicate using radio signals with a mobile radio unit connected to the terminal wherein
when one mobile radio unit or a host connected to one of the networks attempts to communicate with another mobile radio unit connected to another network and is controlled by a routing server that is not controlled by a home mobile unit managing server, and if a destination address resolution is required, an Internet Protocol address alloca ted to the other mobile radio unit by the routing server that is not controlled by the home mobile unit managing server is notified to the one mobile radio unit or the host.

7. A method for managing a mobile radio unit according to claim 6, wherein the communications system managing server further performs a security managing operation to determine whether or not to permit communication of the mobile radio unit traveling between the networks with other communications devices.

8. A recording medium having a computer-readable program for managing a mobile radio unit traveling between networks in a radio communications system for a plurality of networks connected to a global network comprised of essential components, for each network, including at least one routing server and a radio base station connected to the routing server to communicate using radio signals with the mobile radio unit connected to a terminal, wherein the computer-readable program executes a process in such a way that,
when one mobile radio unit or a host connected to one of the networks attempts to communicate with another mobile radio unit connected to another network and is controlled by a routing server that is not controlled by a home mobile unit managing server, and if a destination address resolution is required, an Internet Protocol address allocated to the other mobile radio unit by the routing server that is not controlled by the home mobile unit managing server is notified to the one mobile radio unit or the host.

9. A recording medium according to claim 8, wherein the computer -readable program further comprises a process for performing a security managing operation to determine whether or not to permit the mobile radio unit traveling between networks to communicate with another communications device.

10. A mobile radio unit managing program for managing a mobile radio unit traveling between networks in a radio communications system for a plurality of networks connected to a global network comprised of essential components, for ea ch network, including at least one routing server and a radio base station connected to the routing server to communicate using radio signals with a mobile radio unit connected to a terminal, wherein the mobile radio unit managing program executes a process in such a way that,
when one mobile radio unit or a host connected to one of the networks attempts to communicate with another mobile radio unit connected to another network and is controlled by a routing server that is not controlled by a home mobile u nit managing server, and if a destination address resolution is required, an Internet Protocol address allocated to the other mobile radio unit by the routing server that is not controlled by the home mobile unit managing server is notified to the one mobile radio unit or the host.

11. A mobile terminal managing program according to claim 10, wherein the mobile terminal managing program includes a process for managing security operation to determine whether or not to permit the mobile radio unit traveling between the networks to communicate with another communications device.

12. A routing server in a communications system having at least one routing server connected to a network for connecting to a radio base station to communicate using radio signals with a mobile radio unit connected to an information terminal, comprising:
a first security information storage device for storing the security information to instruct whether or not to permit communication between the mobile radio unit and an information communications device connected to the network; and
a communication control device to control, when it is necessary to establish communication between the mobile radio unit and the information communications device, whether or not to establish communication between the mobile radio unit and the information communications device, based on the security information stored in the first security information storage device.

13. A mobile unit managing server which is provided in a communications system having at least one routing server connected to a network for connecting to a radio base station to communicate using radio signals with a mobile radio unit connected to an information terminal, and is connected to the routing server, comprising:
a second security information storage device for storing the security information to instruct whether or not to permit each mobile radio unit affiliated with the mobile unit managing server as its home mobile unit managing server to communicate with an information communications device connected to the network; and
a security information transmitting control device to control transmitting of the security information in such a way that when the mobile radio unit travels and a connecting routing server is changed, in response to a security information transmission request from the connecting routing server, reads out the security information stored in the second security information storage device and transmits the readout security information to the connecting routing server.

14. An area managing server for serving in a network of a radio communications system that includes a plurality of networks connected to a global network and having at least one routing server connected to the network; a radio base station connected to the routing server and communicating using radio signals with a mobile radio unit connected to a terminal; and a mobile unit managing server for managing the security information for determining whether or not to permit the mobile radio unit and a communicati ons device connected to the network to communicate with each other; wherein the area managing server obtains the security information from a home mobile unit managing server of the mobile radio unit, and transmits the obtained security information to a rou ting server at the travel destination, which is controlled by the area managing server and which is located outside of a home network of the mobile radio unit, comprising:
a memory device for storing the security information;
an information managing device for managing the security information in such a way that the security information transmitted from the home mobile unit managing server to a routing server at the travel destination is received and stored in the memory device, and, when the mobile radio unit travels further from a communications area of the routing server at the travel destination to a communications area of another routing server controlled by the area managing sever, the area managing server responds to a security information transmission request transmitted from the other routing server, and reads out the security information of the mobile radio unit stored in the memory device and transmits readout the security information to the other routing server.

15. An area managing server according to claim 14, wherein, when the mobile radio unit travels to a communications area controlled by another routing server not controlled by the home mobile unit managing server, prior to the information managing device transmitting the security information, an authentication process of the mobile radio unit is completed between the other routing server not controlled by the home mobile unit managing server and the home mobile unit managing server.

16. A method of operating a radio communications system that includes a plurality of networks connected to a global network and having at least one routing server connected to a network; a radio base station connected to the routing server and communicating using radio signals with a mobile radio unit connected to a terminal; a mobile unit managing server for managing the security information for determining whether or not to permit the mobile radio unit and a communications device connected to the network to communicate with each other; and an area managing server for obtaining the security information from a home mobile unit managing server of the mobile radio unit, and transmitting the obtained security information to a routing server at the travel destination, which is controlled by the area managing server and which is located outside of a home network of the mobile radio unit; wherein
the security information transmitted from the home mobile unit managing server to a routing server at the travel destination is received and stored, and, when the mobile radio unit travels further from a communications area of the routing server at the travel destination to a communications area of another routing server controlled by the area managing sever, the area managing server responds to a security information transmission request transmitted from the other routing server, and reads out the security information of the mobile radio unit stored in the memory device, and transmits the readout security information to the other routing server.

17. A communication program for execution by a computer to operate a radio communications system that includes a plurality of networks connected to a global network and having at least one routing server connected to a network; a radio base station connected to the one routing server and communicating using radio signals with a mobile radio unit connected to a terminal; a mobile unit managing server for managing the security information for determining whether or not to permit the mobile radio unit and a communications device connected to the network to communicate with each other; and an area managing server for obtaining the security information from a home mobile unit managing server of the mobile radio unit, and transmitting the obtained security information to a routing server at the travel destination, which is controlled by the area managing server and which is located outside of a home network of the mobile radio unit; the program including:
a step of receiving the security information transmitted from the home mobile unit managing server to the routing server at the travel destination; and
a step of transmitting the security information, when the mobile radio unit travels further from a communications area of the routing server at the travel destination to a communications area of another routing server at the travel destination controlled by the area managing sever, by reading out and transmitting the security information of the traveling mobile radio unit stored in the memory device to the other routing server at the travel destination, in response to a security information transmission request transmitted from the other routing server at the travel destination.

18. Acomputer-readable recording medium having a communication program for execution by a computer to operate a radio c ommunications system that includes a plurality of networks connected to a global network and having at least one routing server connected to a network; a radio base station connected to the one routing server and communicating using radio signals with a mobile radio unit connected to a terminal; a mobile unit managing server for managing the security information for determining whether or not to permit the mobile radio unit and a communications device connected to the network to communicate with each other; and an area managing server for obtaining the security information from a home mobile unit managing server of the mobile radio unit, and transmitting the obtained the security information to a routing server at the travel destination, which is controlled by the area managing server and which is located outside of a home network of the mobile radio unit; the program including:
a step of receiving the security information transmitted from the home mobile unit managing server to the routing server at the travel destination; and
a step of transmitting the security information, when the mobile radio unit travels further from a communications area of the routing server at the travel destination to a communications area of another routing server at the travel des tination controlled by the area managing sever, by reading out and transmitting the security information of the traveling mobile radio unit stored in the memory device to the other routing server at the travel destination, in response to a security information transmission request transmitted from the other routing server at the travel destination.
